# EUROPEAN PATENT SPECIFICATION

(11) **EP 4 358 591 B1**
(45) Date of publication and mention of the grant of the patent: **27.08.2025**
(21) Application number: 22831578.4
(22) Date of filing: 30.05.2022
(51) Int. Cl.: H04W 36/30, H04B 17/318, H04L 65/752, H04L 65/80, H04L 65/1016, H04L 65/75, H04B 17/24

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 29.06.2021 CN 202110731229
(43) Date of publication of application: 24.04.2024
(73) Proprietor: Huawei Technologies Co., Ltd., Longgang Shenzhen, Guangdong 518129 (CN)
(72) Inventor: LIU, Yan, Shenzhen, Guangdong 518129 (CN); YE, Jinzhou, Shenzhen, Guangdong 518129 (CN)
(74) Representative: Gill Jennings & Every LLP
(86) International application number: PCT/CN2022/095912
(87) International publication number: WO 2023/273756

(56) References cited:
- CN-A- 101 227 482
- CN-A- 104 967 810
- US-A1- 2015 092 575
- US-A1- 2016 119 384
- US-A1- 2016 330 660
- US-B1- 9 380 146
- US-B1- 9 456 076

## Description

### TECHNICAL FIELD

Embodiments of this application relate to the communications field, and in particular, to a data transmission method and a related device.

### BACKGROUND

During a real-time call between terminals, to ensure quality of a call voice, call audio collected by a terminal in real time needs to be encoded into an audio stream in real time in a real-time call encoding scheme, and then the audio stream is sent to a peer end of the call through a wireless communications system. If a communications environment of the wireless communications system is poor, a channel bandwidth allocated to the terminal to transmit the audio stream is low. Due to an excessively low bandwidth of a channel, a phenomenon such as a high packet loss rate or a long delay occurs during transmission of the audio stream, which affects transmission of the call audio.

In a data transmission method, the terminal encodes the call audio in an extremely low bit rate encoding scheme, so that a data amount of an obtained audio stream is less than a data amount of the audio stream obtained through encoding in the real-time call encoding scheme. The audio stream with a smaller amount of data is transmitted through the channel with a low bandwidth, so that the phenomenon such as the high packet loss rate or the long delay does not easily occur, thereby ensuring smooth transmission of the call audio.

However, the extremely low bit rate has a lower limit. If a communications environment of the terminal is extremely poor, even though the audio stream at the extremely low bit rate is transmitted, the phenomenon such as the high packet loss rate or the long delay also occurs, which affects transmission of the call audio.

US 2018/092575 relates to initiation of codec rate change by a wireless communication device during a voice over Internet Protocol call. US 2016/0119384 discloses systems and mechanisms by which wireless UE devices renegotiate real-time, LTE-based communication session parameters during a real-time LTE communication session.

### SUMMARY

Embodiments of this application provide a data transmission method and a related device, to implement a call between a first call end and a second call end when a signal at the first call end is poor. The invention is defined by the appended claims. Embodiments not falling within the scope of the claims are for illustrative purposes.

A first aspect of embodiments of this application provides a data transmission method. The method is applied to an access network device, and the method includes:

The access network device establishes a call between a first call end and a second call end by using an IP multimedia subsystem (IP multimedia subsystem, IMS) network. After the call is established, the access network device receives a first voice message packet from the first call end. The first voice message packet is sent after the first call end determines that a first signal strength is less than a first threshold, and the first signal strength is a signal strength of the access network device at the first call end. After receiving the first voice message packet, the access network device transmits the first voice message packet to a first media processing network element, to implement the call between the first call end and the second call end by using the first media processing network element. The first media processing network element is a media processing network element on a side of the second call end.

In this embodiment of this application, the first call end implements the call with the second call end by using the access network device. If the first signal strength is less than the first threshold, it indicates that a signal between the access network device and the first call end is weak. In this case, when an audio stream included in the call is transmitted between the first call end and the access network device, a phenomenon such as a high packet loss rate or a long delay easily occurs. In this embodiment of this application, the access network device receives the first voice message packet from the first call end, and audio data of the first call end is transmitted to the second call end by using the first voice message packet. Because a data amount of a voice message packet is far less than that of an audio stream, when a signal between the access network device and the first call end is weak, compared with transmitting the audio data by using the audio stream, transmitting the voice message packet can reduce a packet loss probability, and can reduce a delay, thereby ensuring quality and real-time performance of the call between the first call end and the second call end.

In this embodiment of this application, a call-to-message function is enabled, and a voice message packet is transmitted between the first call end and the media processing network element by using the access network device, to implement the call between the first call end and the second call end by using the voice message packet.

The access network device determines to enable the call-to-message function. Specifically, before the access network device receives the first voice message packet from the first call end, the method further includes: The access network device receives first measurement information from the first call end. The first measurement information indicates the first signal strength of the access network device at the first call end. The access network device transmits a first enable notification to the first call end based on that the first signal strength is less than the first threshold. The first enable notification indicates the first call end to implement the call with the second call end in a form of a voice message packet. A second media processing network element is a media processing network element on a side of the first call end.

In this embodiment of this application, the access network device determines, based on that the first signal strength is less than the first threshold, that a signal of the access network device at the first call end is weak, and therefore determine to enable call-to-message, and send the first enable notification to the first call end, to indicate the first call end to enable call-to-message. In addition to providing a channel resource for the first call end to implement the call between the first call end and the second call end, the access network device may provide a channel resource for another communications device. Therefore, the access network device may enable call-to-message in a timely manner based on a signal strength at the first call end and a channel resource allocation status. If a signal at the first call end is weak, and no more channel resources can be allocated to the first call end, it may be determined to enable call-to-message. If the signal strength at the first call end is weak, and more channel resources may be allocated to the first call end, the first call end may be allocated more channel resources, to ensure as far as possible that the first call end can implement the call in a form of an audio stream, and quality of audio data received by the second call end by using the audio stream is better. In this manner, coordination between proper channel resource allocation and a low delay and packet loss of the call is implemented.

In an optional implementation, in addition to receiving the first voice message packet from the first call end, the access network device may transmit a voice message packet to the first call end. Specifically, the access network device may receive second measurement information from the first call end. The second measurement information indicates a second signal strength of the access network device at the first call end. The access network device may transmit a second enable notification to the second media processing network element based on that the second signal strength is less than the first threshold. The second enable notification indicates the second media processing network element to implement the call between the first call end and the second call end in a form of a voice message packet. After transmitting the second enable notification to the second media processing network element, the access network device may receive a second voice message packet from the second media processing network element, and transmit the second voice message packet to the first call end. In this way, the voice message packet is transmitted from the media processing network element to the first call end.

In this embodiment of this application, the second measurement information and the first measurement information may or may not be a same piece of information. This is not limited herein.

In this embodiment of this application, the access network device may notify, by using the second enable notification, the media processing network element to implement the call between the first call end and the second call end in a form of a voice message packet. The voice message packet is transmitted in a downlink direction from the media processing network element to the first call end, so that a data amount in the downlink direction is reduced. Compared with transmitting an audio stream in the downlink direction, a packet loss probability can be reduced, and a delay can be reduced, thereby ensuring quality and real-time performance of the call in the downlink direction on the side of the first call end.

In an optional implementation, instead of the access network device, the first call end may determine to enable call-to-message. Specifically, the access network device may receive a second enable notification from the first call end. The second enable notification indicates the second media processing network element to implement the call between the first call end and the second call end in a form of a voice message packet. After receiving the second enable notification, the access network device may transmit the second enable notification to the second media processing network element. After transmitting the second enable notification to the second media processing network element, the access network device may receive a second voice message packet from the second media processing network element, and transmit the second voice message packet to the first call end. In this way, the voice message packet is transmitted from the second media processing network element to the first call end.

In this embodiment of this application, because the first call end may detect a signal strength of the access network device at the first call end in real time, the first call end determines to enable call-to-message without sending a measurement result to another device or receiving an enable notification, so that a procedure in which the first call end enables call-to-message is reduced, and it can be determined based on the signal strength to enable call-to-message in a timely manner, thereby improving a speed of feedback from a data transmission manner (an audio stream or a voice message packet) change to a signal strength change.

In an optional implementation, the first enable notification or the second enable notification not only indicates to enable the call-to-message function, but also may indicate an encoding and/or transmission manner of a voice message packet. Specifically, each of the first enable notification and/or the second enable notification may include: at least one of a fragment size identifier, a fragment interval identifier, a fragment sending rate identifier, and an encoding scheme identifier. The fragment size identifier indicates a fragment size of voice message packet transmission. The fragment interval identifier indicates a fragment interval of voice message packet transmission. The fragment sending rate identifier indicates a fragment sending rate of voice message packet transmission. The encoding scheme identifier indicates to obtain a voice message packet through encoding in a target encoding scheme.

The following uses the first enable notification as an example to describe a beneficial effect of the first/second enable notification carrying an identifier indicating an encoding policy or a sending policy of a voice message packet. In this embodiment of this application, the first enable notification carries an identifier indicating an encoding policy or a sending policy of a voice message packet. After receiving the first enable notification, the first call end may not only learn that data needs to be transmitted in a form of a voice message packet in an uplink direction, but also learn an encoding scheme and/or a sending policy of voice message packet transmission, so that the encoding scheme and/or the sending policy does not need to be obtained additionally, thereby reducing complexity of a procedure and a delay. A beneficial effect of the second enable notification carrying an identifier is similar thereto. Details are not described herein again.

In an optional implementation, if a communications environment of the access network device at the first call end becomes better, the call between the first call end and the second call end may be resumed to a form of an audio stream. That is, the call-to-message function may be disabled when the communications environment becomes better. Specifically, after the access network device receives the first voice message packet from the first call end, the method may further include: The access network device may receive a first audio stream from the first call end. The first audio stream is sent after the first call end determines that a third signal strength is greater than a second threshold, and the third signal strength is a signal strength of the access network device at the first call end. After receiving the first audio stream, the access network device may transmit the first audio stream to the first media processing network element, to implement the call between the first call end and the second call end by using the first media processing network element.

In this embodiment of this application, when a communications resource is poor, audio data between the first call end and the second call end may be transmitted in a form of a voice message packet. When the communications resource becomes better, no phenomenon such as a long delay or a high packet loss rate occurs in audio stream transmission between the first call end and the media processing network element. In this case, the call-to-message function may be disabled, and audio data between the first call end and the second call end is transmitted in a form of an audio stream. Compared with the voice message packet, the audio stream has a larger amount of data and can reflect more information about the audio data. Therefore, call voice quality and the like are improved, and call quality is better.

In an optional implementation, the access network device may determine to disable the call-to-message function. Specifically, before the access network device receives the first audio stream from the first call end, the method may further include: The access network device may receive third measurement information from the first call end. The third measurement information indicates the third signal strength of the access network device at the first call end. The access network device may transmit a first disable notification to the first call end based on that the third signal strength is greater than the second threshold. The first disable notification indicates the first call end to implement the call with the second call end in a form of an audio stream.

In this embodiment of this application, the access network device determines to disable call-to-message. The access network device may properly allocate a channel resource to the first call end based on a signal strength at the first call end, to properly determine an occasion for disabling call-to-message. For example, if the third signal strength is greater than the second threshold, but a communications device with a higher priority requests access, a channel resource needs to be preferentially allocated to the communications device, and a channel resource of the first call end may change. In this case, call-to-message may not be disabled first, and whether to disable call-to-message is determined after the channel resource of the first call end tends to be stable, so that the first call end can be prevented from frequently switching between data transmission manners, to reduce an amount of transmitted signaling data and an operation amount of devices.

In an optional implementation, the access network device may further determine to disable call-to-message in the downlink direction. Specifically, after the access network device receives the first voice message packet from the first call end, the method may further include: The access network device may receive fourth measurement information from the first call end. The fourth measurement information indicates a fourth signal strength of the access network device at the first call end. The access network device may transmit a second disable notification to the second media processing network element based on that the fourth signal strength is greater than the second threshold. The second disable notification indicates the second media processing network element to implement the call between the first call end and the second call end in a form of an audio stream. After transmitting the second disable notification to the second media processing network element, the access network device may receive a second audio stream from the second media processing network element, and transmit the second audio stream to the first call end, to implement the call between the first call end and the second call end in the downlink direction by using the audio stream.

In this embodiment of this application, the access network device may notify, by using the second disable notification, the second media processing network element to implement the call between the first call end and the second call end in a form of an audio stream. The audio stream is transmitted in the downlink direction from the second media processing network element to the first call end, so that call voice quality and the like can be improved in the downlink direction, thereby improving call quality of the first call end.

In an optional implementation, the first call end may determine to disable the call-to-message function. Specifically, after the access network device receives the first voice message packet from the first call end, the method may further include: The access network device may receive a second disable notification from the first call end. The second disable notification indicates the second media processing network element to implement the call between the first call end and the second call end in a form of an audio stream. The access network device may transmit the second disable notification to the second media processing network element. After transmitting the second disable notification to the second media network element, the access network device may receive a second audio stream from the second media processing network element, and transmit the second audio stream to the first call end.

In this embodiment of this application, because the first call end may detect a signal strength of the access network device at the first call end in real time, the first call end determines to disable call-to-message without sending a measurement result to another device or receiving a disable notification, so that a procedure in which the first call end disables call-to-message is reduced, and it can be determined based on the signal strength to disable call-to-message in a timely manner, thereby improving a speed of feedback from a data transmission manner (an audio stream or a voice message packet) change to a signal strength change.

In an optional implementation, a sending policy of a voice message packet between the first call end and the media processing network element may be changed by using a shift indication. Specifically, before the step of receiving a first voice message packet from the first call end, the method may further include: transmitting a first shift indication to the first call end. The first shift indication indicates the first call end to change a sending policy at a first shift time, and transmit a voice message packet by using a first sending policy. The step of receiving a first voice message packet from the first call end may specifically include: receiving the first voice message packet that is transmitted from the first call end by using the first sending policy; and transmitting the first voice message packet to the first media processing network element by using the first sending policy.

In an optional implementation, a sending policy of a voice message packet between the first call end and the media processing network element may be changed by using a shift indication. Specifically, before the step of receiving a second voice message packet from the second media processing network element, the method may further include: receiving a second shift indication from the first call end. The second shift indication indicates the second media processing network element to change a sending policy at a second shift time, and transmit a voice message packet by using a second sending policy. The step of receiving a second voice message packet from the second media processing network element may specifically include: receiving the second voice message packet that is transmitted from the second media processing network element by using the second sending policy. The step of transmitting the second voice message packet to the first call end may specifically include: transmitting the second voice message packet to the first call end by using the second sending policy.

In this embodiment of this application, a sending policy of a voice message packet may be adjusted based on a change of a signal strength of the access network device at the first call end by using a shift indication. For example, a sending rate of the voice message packet may be changed, to adapt to a corresponding signal strength (communications environment). When the signal strength is relatively strong, the voice message packet is transmitted at a relatively high transmission rate, thereby improving quality of audio data transmitted by the voice message packet. When the signal strength is relatively weak, the voice message packet is transmitted at a relatively low transmission rate, to ensure that a low delay and a low packet loss rate can be implemented in voice message packet transmission. This implements matching between a transmission rate and a communications environment.

A second aspect of embodiments of this application provides a data transmission method. The method is applied to a first call end, and the method includes:

The first call end establishes a call with a second call end by using an IP multimedia subsystem IMS network. If determining that a first signal strength of an accessed access network device is less than a first threshold, the first call end encodes first call audio collected in real time to obtain a first voice message packet. After obtaining the first voice message packet, the first call end transmits the first voice message packet to a first media processing network element by using the access network device, to implement the call between the first call end and the second call end by using the first media processing network element. The first media processing network element is a media processing network element on a side of the second call end.

For beneficial effects of the second aspect, refer to the first aspect. Details are not described herein again.

Before the encoding first call audio collected in real time to obtain a first voice message packet, the method further includes: The first call end transmits first measurement information to the access network device. The first measurement information indicates the first signal strength of the access network device at the first call end. The first call end receives a first enable notification from the access network device. The first enable notification indicates the first call end to implement the call with the second call end in a form of a voice message packet.

In an optional implementation, the method further includes: The first call end transmits second measurement information to the access network device. The second measurement information indicates a second signal strength of the access network device at the first call end. The first call end receives a second voice message packet from a second media processing network element by using the access network device. The second media processing network element is a media processing network element on a side of the first call end.

In an optional implementation, the method further includes: The first call end transmits a second enable notification to the second media processing network element by using the access network device. The second enable notification indicates the second media processing network element to implement the call between the first call end and the second call end in a form of a voice message packet. The first call end receives a second voice message packet from the second media processing network element by using the access network device.

In an optional implementation, each of the first enable notification and/or the second enable notification may include: at least one of a fragment size identifier, a fragment interval identifier, a fragment sending rate identifier, and an encoding scheme identifier. The fragment size identifier indicates a fragment size of voice message packet transmission. The fragment interval identifier indicates a fragment interval of voice message packet transmission. The fragment sending rate identifier indicates a fragment sending rate of voice message packet transmission. The encoding scheme identifier indicates to obtain a voice message packet through encoding in a target encoding scheme.

In an optional implementation, after the first call end transmits the first voice message packet to the first media processing network element by using the access network device, the method further includes: If determining that a third signal strength of the access network device is greater than a second threshold, the first call end transmits a first audio stream to the first media processing network element by using the access network device, to implement the call between the first call end and the second call end by using the first media processing network element.

In an optional implementation, before the transmitting a first audio stream to the first media processing network element by using the access network device, the method further includes: The first call end transmits third measurement information to the access network device. The third measurement information indicates the third signal strength of the access network device at the first call end. The first call end receives a first disable notification from the access network device. The first disable notification indicates the first call end to implement the call with the second call end in a form of an audio stream.

In an optional implementation, after the first call end transmits the first voice message packet to the first media processing network element by using the access network device, the method further includes: The first call end transmits fourth measurement information to the access network device. The fourth measurement information indicates a fourth signal strength of the access network device at the first call end. The first call end receives a second audio stream from the second media processing network element by using the access network device.

In an optional implementation, after the first call end transmits the first voice message packet to the first media processing network element by using the access network device, the method further includes: The first call end transmits a second disable notification to the second media processing network element by using the access network device. The second disable notification indicates the second media processing network element to implement the call between the first call end and the second call end in a form of an audio stream. The first call end receives a second audio stream from the second media processing network element by using the access network device.

In an optional implementation, before the step of transmitting the first voice message packet to a first media processing network element by using the access network device, the method may further include: receiving a first shift indication from the access network device. The first shift indication indicates the first call end to change a sending policy at a first shift time, and transmit a voice message packet by using a first sending policy. The step of transmitting the first voice message packet to a first media processing network element by using the access network device includes: transmitting the first voice message packet to the access network device by using the first sending policy, to transmit the first voice message packet to the first media processing network element by using the access network device.

In an optional implementation, before the receiving a second voice message packet from a second media processing network element by using the access network device, the method may further include: transmitting a second shift indication to the second media processing network element by using the access network device. The second shift indication indicates the second media processing network element to change a sending policy at a second shift time, and transmit a voice message packet by using a second sending policy. The step of receiving a second voice message packet from a second media processing network element by using the access network device includes: receiving, by using the access network device, the second voice message packet that is transmitted from the second media processing network element by using the second sending policy.

A third aspect of embodiments of this application provides a communications apparatus, comprising: a processor and a communications interface, wherein the processor is configured to implement the method according to any one of claims 1 to 9.

An aspect of embodiments of this application provides a communications system.
The communications system includes:
a first call end, an access network device, a first media processing network element, a second media processing network element, and a second call end.

The communications system is configured to implement the data transmission method in the first aspect and/or the second aspect.

An aspect of embodiments of this application provides a computer-readable storage medium. The computer-readable storage medium stores a program. When a computer executes the program, the method in the first aspect or the second aspect is performed.

An aspect of embodiments of this application provides a computer program product. When the computer program product is executed on a computer, the computer performs the method in the first aspect or the second aspect.

### BRIEF DESCRIPTION OF DRAWINGS

FIG. 1 is a schematic diagram of an application architecture according to an embodiment of this application;
FIG. 2 is a schematic flowchart of a data transmission method according to an embodiment of this application;
FIG. 3 is another schematic flowchart of a data transmission method according to an embodiment of this application;
FIG. 4 is another schematic flowchart of a data transmission method according to an embodiment of this application;
FIG. 5 is another schematic flowchart of a data transmission method according to an embodiment of this application;
FIG. 6a is a schematic diagram of a data transmission method according to an embodiment of this application;
FIG. 6b is another schematic diagram of a data transmission method according to an embodiment of this application;
FIG. 7 is another schematic flowchart of a data transmission method according to an embodiment of this application;
FIG. 8 is a schematic diagram of a structure of an access network device according to an embodiment of this application;
FIG. 9 is a schematic diagram of a structure of a first call end according to an embodiment of this application;
FIG. 10 is a schematic diagram of a structure of a communications apparatus according to an embodiment of this application; and
FIG. 11 is a schematic diagram of a structure of a communications apparatus according to an embodiment of this application.

### DESCRIPTION OF EMBODIMENTS

The following describes embodiments of the present invention with reference to accompanying drawings in embodiments of the present invention. Terms used in the embodiment part of the present invention are intended only to explain specific embodiments of the present invention, and not intended to limit the present invention. A person of ordinary skill in the art may learn that, with development of technologies and emergence of new scenarios, technical solutions provided in embodiments of this application are also applicable to similar technical problems.

In the specification, claims, and accompanying drawings of this application, terms such as "first" and "second" are intended to distinguish between similar objects but do not necessarily indicate a specific order or sequence. It needs to be understood that the terms used in such a way are interchangeable in proper circumstances, which is merely a distinguishing manner used when objects having a same attribute are described in embodiments of this application. In addition, terms "include" and "have" and any variations thereof are intended to cover non-exclusive inclusions, so that a process, method, system, product, or device including a series of units is not necessarily limited to those units, but may include other units that are not explicitly listed or are inherent to such processes, methods, products, or devices.

The following describes some technical terms in embodiments of this application.

SIP: The session initiation protocol (session initiation protocol, SIP) is a multimedia communications protocol developed by the internet engineering task force (internet engineering task force, IETF), which is a text-based application layer control protocol, and is used to create, modify, and release sessions of one or more participants. The SIP is an IP voice session control protocol originated from the internet, and is flexible, easy to implement, easy to expand, and the like.

SDP: The session description protocol (session description protocol, SDP) is used for media negotiation between session entities, which is an application layer control protocol used to describe a multimedia session, and provides a multimedia session description for purposes such as session notification, session invitation, and other forms of multimedia session initialization. The SDP is a text-based protocol, so that it can be ensured that the protocol is scalable, and has a wide application range. The SDP is entirely a session description format, which is not a transport protocol, and uses different appropriate transport protocols, including a session announcement protocol (session announcement protocol, SAP), the session initiation protocol SIP, a real time streaming protocol (real time streaming protocol, RTSP), a multipurpose internet mail extensions (multipurpose internet mail extensions, MIME) email, and a hypertext transfer protocol (hypertext transfer protocol, HTTP).

RTP: The real-time transport protocol (real-time transport protocol, RTP) provides an end-to-end transmission service for real-time transmission of interactive audio and videos, including payload type determining, sequence encoding, timestamping, and transmission monitoring functions. The RTP may further transmit data to a plurality of destinations based on a user datagram protocol (user datagram protocol, UDP) or in conjunction with another suitable protocol if an underlying network supports multiplexing.

RTCP: The real-time transport control protocol (real-time transport control protocol, RTCP) is a sister protocol to the real-time transport protocol (RTP). The RTCP provides out-of-band (out-of-band) control for an RTP media stream. The RTCP does not transmit data by itself, but cooperates with the RTP to package and send multimedia data. The RTCP periodically transmits control data between participants in a streaming multimedia session. The RTCP mainly functions to provide feedback for quality of service (quality of service, QoS) provided by the RTP. The RTCP collects statistical information about a related media connection, such as a quantity of transmitted bytes, a quantity of transmitted packets, a quantity of lost packets, a jitter, and one-way and round-trip network delays. A network application may use information provided by the RTCP to try to improve quality of service, such as limiting a traffic amount of information or switching to a codec with a smaller compression ratio.

Calling end: It is a party that initiates a call.

Called end: It is a party that answers a call.

First call end/Second call end: It is one of the calling end or the called end. If the first call end is a calling end, the second call end is a called end. If the first call end is a called end, the second call end is a calling end.

Embodiments of this application provide a data transmission method and a related device, to implement a call between a first call end and a second call end when a communications environment is poor.

For ease of understanding, the following describes an application architecture in an embodiment of this application.

### I. Application architecture in an embodiment of this application.

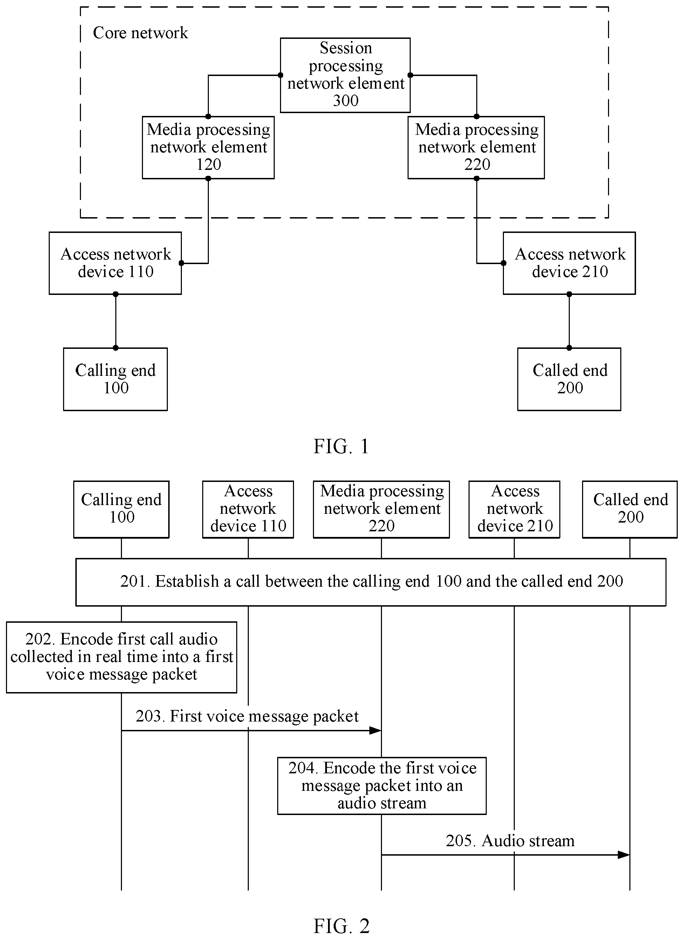

FIG. 1 is a schematic diagram of an application architecture according to an embodiment of this application. As shown in FIG. 1, a calling end 100 accesses a core network by using an access network device 110, and a media processing network element 120 in the core network is configured to adjust formats of uplink and downlink call data of the calling end 100. A called end 200 accesses the core network by using the access network device 210, and a media processing network element 220 in the core network is configured to adjust formats of uplink and downlink call data of the called end 200. A session processing network element 300 in the core network is configured to manage a call between the calling end 100 and the called end 200.

The network elements in the core network, the access network device 110, the calling end 100, the access network device 210, and the called end 200 together constitute an IMS network. The IMS network is configured to implement the call between the calling end 100 and the called end 200.

In this embodiment of this application, the calling end 100 and the called end 200 are two ends of a call. The calling end 100 may be used as the first call end, and the called end 200 may be used as the second call end. Alternatively, the called end 200 may be used as the first call end, and the calling end 100 may be used as the second call end. This is not limited herein. The calling end 100 and the called end 200 are collectively referred to as terminal devices.

Specifically, the access network device 110 and/or the access network device 210 may be a base station. In this embodiment of this application, other than the base station, the access network device 110 and/or the access network device 210 may be another communications apparatus, such as an edge device, provided that the another communications apparatus has a capability of providing a channel resource for the calling end 100 or the called end 200. This is not limited herein.

Specifically, a communications system in this embodiment of this application may be a 5th generation mobile communications technology (5th generation mobile communications technology, 5G) system, a satellite communications system, a short-range wireless communications system, or the like. A system architecture is shown in FIG. 1. The system architecture includes a calling end 100 and a called end 200. An access network device 110 provides a channel resource for the calling end 100, and an access network device 210 provides a channel resource for the called end 200. The wireless communications system may also perform point-to-point communication. For example, a plurality of terminal devices communicate with each other. In this embodiment of this application, the access network device 110 or the access network device 210 may alternatively provide a service for more or fewer terminal devices. A quantity and a type of the terminal devices are determined based on an actual requirement. This is not specifically limited herein.

It needs to be noted that the wireless communications system mentioned in this embodiment of this application includes but is not limited to a narrowband-internet of things (narrowband-internet of things, NB-IoT) system, a long term evolution (long term evolution, LTE) system, three major application scenarios of a 5G mobile communications system: enhanced mobile broadband (enhanced mobile broadband, eMBB), ultra-reliable and low-latency communications (ultra-reliable & low-latency communications, URLLC), mass machine type communications (massive machine type communications, mMTC), and another mobile communications system that may be developed in the future. This is not limited herein.

In this embodiment of this application, the access network device 110 and/or the access network device 210 may be an apparatus that is deployed in a radio access network to provide a wireless communications function for a terminal device. The access network device 110 and/or the access network device 210 may provide a wireless communications function for a plurality of terminal devices. The access network device 110 and/or the access network device 210 may include a macro base station, a micro base station (also referred to as a small cell), a relay station, an access point, and the like in various forms. In systems that use different radio access technologies, a device that has a function of the access network device 110 and/or the access network device 210 may have different names. For example, in an LTE system, the device is referred to as an evolved NodeB (evolved NodeB, eNB, or eNodeB). In a 3rd generation (3rd generation, 3G) system, the device is referred to as a NodeB (NodeB). For ease of description, in this embodiment of this application, the foregoing apparatuses that provide a wireless communications function for a terminal device are collectively referred to as an access network device or a base station (base station, BS).

The access network device 110 and/or the access network device 210 in this application may be an evolved NodeB (evolved NodeB, eNB or eNodeB) in LTE, or a base station in a 5G network, a broadband network gateway (broadband network gateway, BNG), an aggregation switch, a non-3rd generation partnership project (3rd generation partnership project, 3GPP) access device, or the like. This is not specifically limited in this embodiment of this application. Optionally, the base station in this embodiment of this application may include base stations in various forms, for example, a next-generation NodeB (gNodeB, gNB), a transmitting and receiving (transmitting and receiving point, TRP), a transmitting point (transmitting point, TP), a mobile switching center, and a device that undertakes a base station function in device-to-device (Device-to-Device, D2D), vehicle-to-everything (vehicle-to-everything, V2X), machine-to-machine (machine-to-machine, M2M), and internet of things (Internet of Things) communication. This is not specifically limited in this embodiment of this application.

In this embodiment of this application, the calling end 100, the called end 200, the first call end, and the second call end may all be referred to as terminal devices. The terminal device in this embodiment of this application may include various handheld devices, in-vehicle devices, wearable devices, computing devices, or other processing devices connected to a wireless modem that have a wireless communications function. The terminal device may also be referred to as a terminal (terminal). The terminal device may alternatively be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communications (machine type communications, MTC) terminal, or the like. This is not limited herein.

In this embodiment of this application, there may be more or fewer terminal devices in the communications system. A quantity and a type of the terminal devices are determined based on an actual requirement. This is not specifically limited herein.

The terminal device mentioned in this embodiment of this application may be a device with a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communications device, a user agent, or a user apparatus. The terminal device may alternatively be a satellite phone, a cellular phone, a smartphone, a wireless data card, a wireless modem, a machine type communications device, a cordless phone, a session initiation protocol (session initiation protocol, SIP) phone, a wireless local loop (wireless local loop, WLL) station, a personal digital assistant (personal digital assistant, PDA), a handheld device, a computing device or another processing device connected to a wireless modem, an in-vehicle device, a communications device carried on a high-altitude aircraft, a wearable device, an unmanned aerial vehicle, or a robot that has a wireless communications capability, a terminal in device-to-device (device-to-device, D2D) communication, a terminal in vehicle-to-everything (vehicle-to-everything, V2X) communication, a virtual reality (virtual reality, VR) terminal device, an augmented reality (augmented reality, AR) terminal device, a mixed reality (mixed reality, MR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communications network, or the like. This is not limited in this application.

Based on the architecture shown in FIG. 1, embodiments of this application provide a data transmission method, to implement a call between a first call end and a second call end when a signal at the first call end is poor.

### II. Data transmission method provided in embodiments of this application.

According to the data transmission method provided in embodiments of this application, a call between a first call end and a second call end can be implemented when a signal at one end of the call is poor or signals at both ends are poor. The following separately describes the data transmission method provided in embodiments of this application when a signal at one end is poor and when signals at both ends are poor.
1. Data transmission method provided in an embodiment of this application when a signal at the first call end is poor.

For example, the following describes, by using the calling end 100 as the first call end and the called end 200 as the second call end, a method shown in an embodiment of this application when a signal at the first call end (calling end 100) is poor during a call. Refer to FIG. 2. The method includes the following steps:
201: Establish a call between the calling end 100 and the called end 200.

To implement the call between the calling end 100 and the called end 200, the call between the calling end 100 and the called end 200 needs to be established in the IMS network.

The calling end 100 may initiate a session establishment request to the called end 200 through the IMS network, to request to establish the call between the calling end 100 and the called end 200.

The called end 200 may send a session establishment response to the calling end through the IMS network, to complete establishment of the call between the calling end 100 and the called end 200.

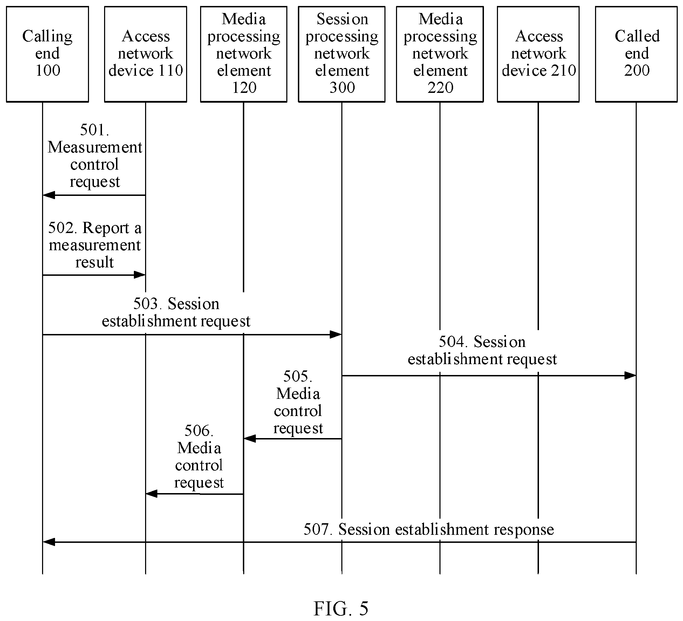

Step 201 is described in detail in an embodiment shown in FIG. 5, and details are not described herein.

202: The calling end 100 encodes first call audio collected in real time into a first voice message packet.

If the calling end 100 determines that a first signal strength of the access network device 110 at the calling end 100 is less than a first threshold, it indicates that a signal between the calling end 100 and the access network device 110 is weak, and when an audio stream is transmitted between the calling end 100 and the access network device 110, a phenomenon such as a high packet loss rate or a long delay easily occurs.

In this case, the calling end 100 may encode first call audio collected in real time into a first voice message packet, and transmit content of the first call audio to the called end by using the first voice message packet.

In this embodiment of this application, the first threshold may be determined based on a relationship between a signal strength and a packet loss rate, a relationship between a signal strength and a call definition, or the like. This is not limited herein. Optionally, the first threshold may depend on a setting of an operator. For example, the first threshold may be 40 kpbs, or may have another value, such as 45 kbps, 42 kbps, 35 kbps, 32 kbps, or 30 kbps. This is not limited herein.

203: The calling end 100 transmits the first voice message packet to the media processing network element 220 by using the access network device 110.

After obtaining the first voice message packet through encoding, the calling end 100 may transmit the first voice message packet to the media processing network element 220 by using the access network device 110. In this way, the content of the first call audio is transmitted to the called end 200 by using the media processing network element 220.

In this embodiment of this application, the media processing network element 220 is also referred to as a first media processing network element. The first media processing network element is a media processing network element on a side of the second call end (called end 200), and is configured to encode or forward uplink or downlink data of the called end 200.

In this embodiment of this application, when a signal between the calling end 100 and the access network device 110 is poor, call audio collected in real time is encoded into a voice message packet, and the voice message packet is transmitted between the calling end 100 and the access network device 110. The call audio collected in real time is transmitted in a form of a voice message packet rather than a form of an audio stream, so that a smaller amount of data is transmitted, thereby reducing a packet loss rate and a delay between the calling end 100 and the access network device 110, and ensuring real-time performance of the call.

204: The media processing network element 220 encodes the first voice message packet into an audio stream.

If a signal strength of the access network device 210 at the called end 200 is not less than the first threshold, no voice message packet needs to be transmitted between the access network device 210 and the called end 200. Therefore, the media processing network element 220 may encode the first voice message packet into an audio stream.

205: The media processing network element 220 transmits the audio stream to the called end 200 by using the access network device 210.

After obtaining the audio stream through encoding, the media processing network element 220 may transmit the audio stream to the called end 200 by using the access network device 210. In this way, the content of the first call audio is transmitted to the called end 200.

It needs to be noted that in the embodiment shown in FIG. 2, how to implement a call between the first call end and the second call end when a signal at the first call end is poor is described by using the calling end 100 as the first call end. The calling end 100 does not impose a limitation on the first call end, and the first call end may alternatively be the called end 200. This is not limited herein. If the first call end is the called end 200, the specific procedure in FIG. 2 is adaptively changed, and details are not described herein.

In this embodiment of this application, the first call end implements the call with the second call end by using the access network device. When a signal between the access network device and the first call end is weak, the audio data of the first call end is transmitted to the second call end by using the first voice message packet. Because a data amount of a voice message packet is far less than that of an audio stream, when a signal between the access network device and the first call end is weak, compared with transmitting audio data by using the audio stream, transmitting the voice message packet can reduce a packet loss probability, and can reduce a delay, thereby ensuring quality and real-time performance of the call between the first call end and the second call end.

In this embodiment of this application, voice message packet transmission between a terminal (calling end/called end) and an access network device is referred to as a call-to-message function. To implement voice message packet transmission, the call-to-message function needs to be enabled. The function may be enabled by the access network device or the terminal (calling end/called end), which is described separately below.

1.1. The access network device enables the call-to-message function.

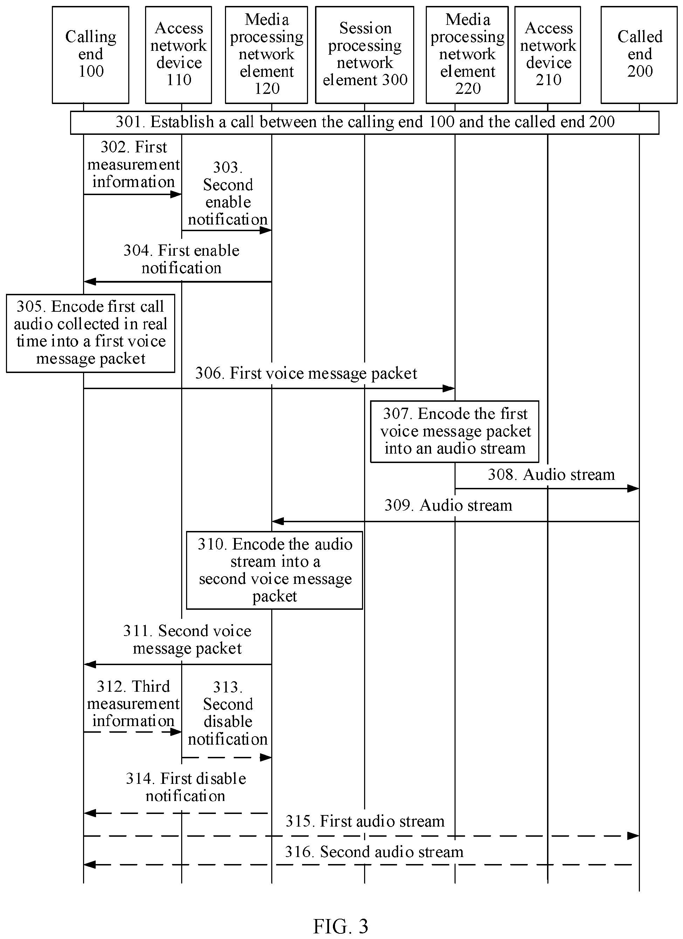

With reference to FIG. 3, the following describes a procedure in which the access network device enables the call-to-message function.

For example, the following describes, by using the calling end 100 as the first call end and the called end 200 as the second call end, a method for enabling the call-to-message function by the access network device when a signal at the first call end (calling end 100) is poor during a call. The method includes the following steps:
301: Establish a call between the calling end 100 and the called end 200.
   A process of establishing the call between the calling end 100 and the called end 200 is described in detail in the embodiment shown in FIG. 5, and is not described herein.
302: The calling end 100 transmits first measurement information to the access network device 110.
   The calling end 100 may detect a first signal strength of the access network device 110 at the calling end 100, and transmit, to the access network device 110, first measurement information indicating the first signal strength. The first measurement information and the first signal strength are used to determine whether to enable call-to-message.
303: The access network device 110 transmits a second enable notification to the media processing network element 120.

If the first signal strength is less than the first threshold, the access network device 110 may determine that a signal at the calling end 100 is poor, and therefore transmit a second enable notification to the media processing network element 120. The second enable notification indicates the media processing network element 120 to transmit call data in a downlink direction to the calling end 100 in a form of a voice message packet, to implement the call between the calling end 100 and the called end 200.

Optionally, the second enable notification may be an RTCP packet. In this embodiment of this application, an APP field of the RTCP packet is extended:
name {STVM}: application-dependent data {Open_SpeechtoVoiceMessage}. The field indicates to enable the call-to-message function at the calling end 100.

STVM and SpeechtoVoiceMessage both represent speech to voice message, that is, call-to-message.

In this embodiment of this application, the second enable notification enables the call-to-message function in the downlink data transmission direction of the calling end 100.

Optionally, the second enable notification may further indicate an encoding policy and/or a sending policy in the downlink data transmission direction.

The second enable notification may include a fragment size identifier, and the fragment size identifier indicates a fragment size of voice message packet transmission in the downlink direction. In addition to the fragment size identifier, the second enable notification may include other information, for example, a fragment interval identifier, a fragment sending rate identifier, and an encoding scheme identifier. This is not limited herein. The fragment interval identifier indicates a fragment interval of voice message packet transmission in the downlink direction. The fragment sending rate identifier indicates a fragment sending rate of voice message packet transmission in the downlink direction. The encoding scheme identifier indicates the media processing network element 120 to obtain a voice message packet through encoding in a target encoding scheme in the downlink direction.

Optionally, an APP field of the RTCP packet may be extended, and an extension field indicates an encoding or sending policy of a voice message packet.

For example, a field {STVM}: application-dependent data {Internal, Package Size} may be extended, and the field indicates a fragment size of a voice message packet.

For example, a field {STVM}: application-dependent data {message rate} may be extended, and the field indicates a sending rate of a voice message packet.

For example, a header PT may be extended as follows: Define a field PT=77: m_melp, where melp represents a mixed excitation linear prediction (mixed excitation linear prediction, MELP) encoding scheme.

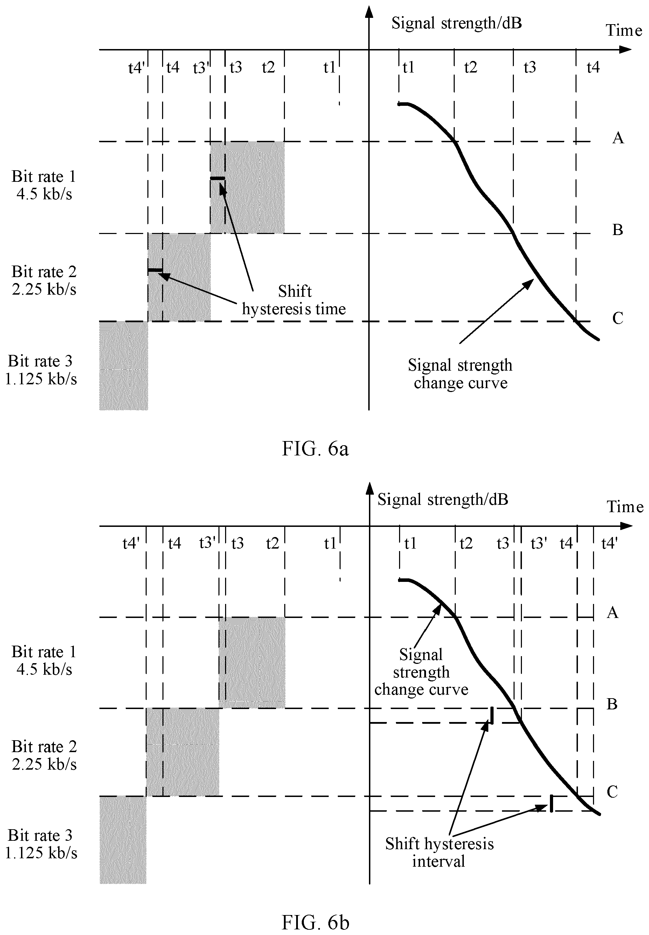

Optionally, voice message packet transmission may be classified into a plurality of levels based on a transmission rate. For example, as shown in FIG. 6a, voice message packet transmission may be classified into three levels: a bit rate 1 (4.5 kb/s), a bit rate 2 (2.25 kb/s), and a bit rate 3 (1.125 kb/s). When a signal strength of the access network device at the first call end falls within a range of [B, A], a voice message packet is transmitted at the rate 1. When the signal strength falls within a range of [C, B], transmission is performed at the rate 2. When the signal strength is less than C, transmission is performed at the rate 3.

Optionally, the signal strength A may be the first threshold. The signal strengths B and C may be determined based on a relationship between a signal strength and a packet loss rate, a relationship between a signal strength and a call definition, or the like. This is not limited herein. Optionally, the signal strengths B and C may depend on settings of an operator.

Optionally, the second enable notification may further indicate a shift occurrence time. For example, it is assumed that the signal strength A corresponds to the first threshold. When the signal strength at the calling end 100 is greater than the first threshold, the calling end 100 transmits call audio in a form of an audio stream. When the signal strength is less than the first threshold, the second enable notification indicates the media processing network element 120 (second media processing network element) to change a sending policy at a second shift time, and transmit a voice message packet by using a second sending policy. The second sending policy is a sending policy corresponding to the rate 1 shown in FIG. 6a. In this case, the second enable notification is also referred to as a second shift indication, and the second shift indication indicates the second media processing network element to change the sending policy at the second shift time, and transmit the voice message packet by using the second sending policy.

In this embodiment of this application, other than the second enable notification, the second shift indication may alternatively be another notification, and is used to adjust a sending policy based on a signal strength when call audio data is transmitted in a form of a voice message packet. This is not limited herein.

Optionally, to prevent a transmission rate from repeatedly switching between different levels due to fluctuations of the signal strength, a shift hysteresis time and a shift hysteresis interval may be set.

As shown in a right half of FIG. 6a, if a signal strength change is shown by a signal strength change curve, between a time t2 and a time t3, a voice message packet needs to be transmitted at the bit rate 1. At the time t3, the transmission rate needs to be switched from the bit rate 1 to the bit rate 2 to transmit a voice message packet, that is, a "shift" is performed at the time t3. At a time t4, the transmission rate needs to be switched from the bit rate 2 to the bit rate 3 to transmit a voice message packet, that is, a "shift" is performed at the time t4.

As shown in a left half of FIG. 6a, in a solution of a shift hysteresis time, a "shift" occurrence time may be delayed. A "shift" near a time t3 is used as an example. A shift hysteresis time starts after t3, and no shift is performed within the shift hysteresis time. If the signal strength at the first call end is less than A within the shift hysteresis time, the shift is performed at a time t3'. The time t3' differs from the time t3 by one shift hysteresis time.

As shown in FIG. 6b, in a solution of a shift hysteresis interval, a threshold signal strength that needs to be met by a "shift" may be properly adjusted, and a signal strength when the "shift" occurs may be lowered. A "shift" near a time t3 is used as an example. On a signal strength change curve in a right half of the figure, for a signal strength that is one shift hysteresis interval less than a signal strength B, a point that is on the signal strength change curve and that corresponds to the signal strength is determined. Then, a time t3' corresponding to the point is determined, and the time t3' is determined as a time of the "shift".

In this embodiment of this application, the media processing network element 120 is also referred to as a second media processing network element, and the second media processing network element is configured to encode or forward uplink or downlink data of the calling end 100.

304: The media processing network element 120 transmits a first enable notification to the calling end 100 by using the access network device 110.

In step 303, the second enable notification is transmitted to the media processing network element 120, thereby ensuring that the call-to-message function is enabled in the downlink data transmission direction of the calling end 100. Poor signal quality affects both uplink and downlink data transmission. Therefore, it further needs to be ensured that the call-to-message function is enabled in an uplink data transmission direction.

To enable the call-to-message function in the uplink data transmission direction, the media processing network element 120 may transmit a first enable notification to the calling end 100 by using the access network device. The first enable notification indicates the calling end 100 to implement the call with the called end 200 in a form of a voice message packet.

Optionally, the first enable notification and the second enable notification may be RTCP packets. In this embodiment of this application, an APP field of the RTCP packet is extended:
name {STVM}: application-dependent data {Open_SpeechtoVoiceMessage}. The field indicates to enable the call-to-message function at the calling end 100.

STVM and SpeechtoVoiceMessage both represent speech to voice message, that is, call-to-message.

Optionally, the first enable notification may further indicate an encoding policy and/or a sending policy in the uplink data transmission direction. For content included in the first enable notification, refer to the description of the second enable notification in step 303. Details are not described herein again. Identifiers indicate an encoding or sending policy in the uplink direction. An encoding scheme identifier indicates the calling end 100 to obtain a voice message packet through encoding in a target encoding scheme in the uplink direction.

Optionally, the first enable notification may further indicate a shift occurrence time. For example, when the signal strength at the calling end 100 is greater than the first threshold, the calling end 100 transmits call audio in a form of an audio stream. When the signal strength is less than the first threshold, the first enable notification indicates the calling end 100 (first call end) to change a sending policy at a first shift time, and transmit a voice message packet by using a first sending policy. The first sending policy is a sending policy corresponding to the rate 1 shown in FIG. 6a. In this case, the first enable notification is also referred to as a first shift indication, and the first shift indication indicates the first call end to change the sending policy at the first shift time, and transmit the voice message packet by using the first sending policy.

In this embodiment of this application, other than the first enable notification, the first shift indication may alternatively be another notification, and is used to adjust a sending policy based on a signal strength when call audio data is transmitted in a form of a voice message packet. This is not limited herein.

Optionally, to prevent a transmission rate from repeatedly switching between different levels due to fluctuations of the signal strength, a shift hysteresis time and a shift hysteresis interval may be set. For descriptions of the shift hysteresis time and the shift hysteresis interval, refer to step 303. Details are not described herein again.

In step 304, the first enable notification is sent to the calling end 100 to enable the call-to-message function in the uplink direction, which is determined by the media processing network element 120 based on the second enable notification in the downlink direction. Optionally, the first enable notification may alternatively be transmitted as follows: The access network device 110 receives second measurement information from the calling end 100. The second measurement information indicates a second signal strength of the access network device 110 at the calling end 100. Based on that the second signal strength is less than the first threshold, the access network device 110 determines that the call-to-message function needs to be enabled in the uplink direction, and therefore transmits the first enable notification to the calling end 100.

Optionally, for a same terminal device (the calling end 100 is used as an example herein), uplink and downlink call-to-message functions may be enabled together. In this case, the first measurement information and the second measurement information may be a same piece of information. In this embodiment of this application, the first measurement information and the second measurement information may alternatively be different information. This is not limited herein.

305: The calling end 100 encodes first call audio collected in real time into a first voice message packet.

306: The calling end 100 transmits the first voice message packet to the media processing network element 220 by using the access network device 110.

307: The media processing network element 220 encodes the first voice message packet into an audio stream.

308: The media processing network element 220 transmits the audio stream to the called end 200 by using the access network device 210.

For steps 305 to 308, refer to steps 202 to 205 in the embodiment shown in FIG. 2. Details are not described herein again.

Optionally, if an encoding policy is indicated in the first enable notification in step 304, in step 305, the first voice message packet may be obtained through encoding based on the encoding policy indicated in the first enable notification.

Optionally, if a sending policy is indicated in the first enable notification in step 304, in step 306, the first voice message packet may be transmitted to the access network device 110 based on the sending policy indicated in the first enable notification, thereby reducing an amount of data transmitted between the calling end 100 and the access network device 110, and reducing a packet loss rate, a delay, and the like of uplink data transmission of the calling end 100.

Optionally, in step 306, the first voice message packet may be transmitted in a form of an RTP packet. In this embodiment of this application, a header PT (payload type) of an RPT packet header may be extended. The header PT field may indicate that the packet is a voice message packet and indicate an encoding scheme of the voice message packet.

309: The called end 200 transmits an audio stream to the media processing network element 120 by using the access network device 210.

A signal at the called end 200 is normal. Therefore, the called end 200 still transmits data to the side of the calling end 100 in a form of an audio stream. For example, the called end 200 transmits an audio stream to the media processing network element 120 by using the access network device 210, and the audio stream carries call audio collected by the called end 200 in real time.

310: The media processing network element 120 encodes the audio stream into a second voice message packet.

In step 303, the media processing network element 120 receives the second enable notification from the access network device 110. Therefore, all downlink data to be transmitted to the calling end 100 needs to be converted to a format of a voice message packet.

Specifically, the media processing network element 120 may encode the audio stream from the called end 200 into a second voice message packet.

Optionally, if an encoding policy is indicated in the second enable notification in step 303, in step 310, the second voice message packet may be obtained through encoding based on the encoding policy indicated in the second enable notification.

311: The media processing network element 120 transmits the second voice message packet to the calling end 100 by using the access network device 110.

After obtaining the second voice message packet, the media processing network element 120 may transmit the second voice message packet to the calling end 100 by using the access network device 110.

Optionally, if a sending policy is indicated in the second enable notification in step 303, in step 311, the second voice message packet may be transmitted to the calling end 100 based on the sending policy indicated in the second enable notification, thereby reducing an amount of data transmitted between the access network device 110 and the calling end 100, and reducing a packet loss rate, a delay, and the like of downlink data transmission of the calling end 100.

Optionally, if a voice message packet is transmitted in step 309, the voice message packet may be directly transmitted to the calling end 100 by using the access network device 110. In this case, step 310 does not need to be performed. Alternatively, if the calling end 100 cannot decode the voice message packet received in step 309, in step 310, the media processing network element 120 may encode the voice message packet into a second voice message packet, so that the calling end 100 can decode the second voice message packet.

It needs to be noted that data transmission implemented in a form of a voice message packet in the uplink direction is described in steps 305 to 308, and data transmission implemented in a form of a voice message packet in the downlink direction is described in steps 309 to 311. Data can be transmitted in a form of a voice message packet in a corresponding direction only after the call-to-message function is enabled. Therefore, steps 305 to 308 (uplink transmission) are performed after step 304 (uplink enabling), and step 309 to step 311 (downlink transmission) are performed after step 303 (downlink enabling). In this embodiment of this application, a time sequence relationship between uplink transmission and downlink transmission is not limited. Steps 305 to 308 may be performed after steps 309 to 311, or may be performed simultaneously with steps 309 to 311. In addition, a time sequence relationship between each of steps 305 to 308 and each of steps 309 to 311 is not limited. That is, uplink enabling and downlink enabling may occur simultaneously or successively, and a time sequence relationship between the two is not limited; and uplink transmission and downlink transmission may occur simultaneously or successively, and a time sequence relationship between the two is not limited either, provided that uplink transmission definitely occurs after uplink enabling, and downlink transmission definitely occurs after downlink enabling.

Optionally, if the signal at the calling end 100 recovers to a normal level, the call-to-message function may be disabled, to implement the call between the calling end 100 and the called end 200 in a form of an audio stream. A process of disabling call-to-message is shown as follows:
312: The calling end 100 transmits third measurement information to the access network device 110.
   The calling end 100 may detect a third signal strength of the access network device 110 at the calling end 100, and transmit, to the access network device 110, third measurement information indicating the third signal strength. The third measurement information and the third signal strength are used to determine whether to disable call-to-message in the uplink direction.
313: The access network device 110 transmits a second disable notification to the media processing network element 120.

If a fourth signal strength is greater than a second threshold, the access network device 110 may determine that the signal at the calling end 100 recovers to a normal level, and therefore transmit a second disable notification to the media processing network element 120. The second disable notification indicates the media processing network element 120 to transmit call data in the downlink direction to the calling end 100 in a form of an audio stream, to implement the call between the calling end 100 and the called end 200.

Optionally, the second disable notification may be an RTCP packet. In this embodiment of this application, an APP field of the RTCP packet is extended:
name {STVM}: application-dependent data { Close_SpeechtoVoiceMessage}. The field indicates to disable the call-to-message function at the calling end 100.

STVM and SpeechtoVoiceMessage both represent speech to voice message, that is, call-to-message.

In this embodiment of this application, the second disable notification disables the call-to-message function in the downlink data transmission direction of the calling end 100.

314: The media processing network element 120 transmits a first disable notification to the calling end 100 by using the access network device 110.

In step 311, the second disable notification is transmitted to the media processing network element 120, thereby ensuring that the call-to-message function is disabled in the downlink data transmission direction of the calling end 100. When the signal recovers to normal, both uplink and downlink data can be normally transmitted in a form of an audio stream. Therefore, the call-to-message function may be further disabled in the uplink data transmission direction.

To disable the call-to-message function in the uplink data transmission direction, the media processing network element 120 may transmit a first disable notification to the calling end 100 by using the access network device. The first disable notification indicates the calling end 100 to implement the call with the called end 200 in a form of an audio stream.

Optionally, the first disable notification may be an RTCP packet. In this embodiment of this application, an APP field of the RTCP packet is extended:
name {STVM}: application-dependent data { Close_SpeechtoVoiceMessage}. The field indicates to disable the call-to-message function at the calling end 100.

STVM and SpeechtoVoiceMessage both represent speech to voice message, that is, call-to-message.

In step 314, the first disable notification is sent to the calling end 100 to disable the call-to-message function in the uplink direction, which is determined by the media processing network element 120 based on the second disable notification in the downlink direction. Optionally, the first disable notification may alternatively be transmitted as follows: The access network device 110 receives the fourth measurement information from the calling end 100. The fourth measurement information indicates a fourth signal strength of the access network device 110 at the calling end 100. Based on that the fourth signal strength is greater than the second threshold, the access network device 110 determines that the call-to-message function needs to be disabled in the uplink direction, and therefore transmits the first disable notification to the calling end 100.

Optionally, for a same terminal device (the calling end 100 is used as an example herein), uplink and downlink call-to-message functions may be disabled together. In this case, the third measurement information and the fourth measurement information may be a same piece of information. In this embodiment of this application, the third measurement information and the fourth measurement information may alternatively be different information. This is not limited herein.

315: The calling end 100 transmits a first audio stream to the called end 200 by using the access network device 110.

The calling end 100 learns, in step 314 by using the first disable notification, that the call-to-message function is disabled in the uplink direction, and therefore may transmit a first audio stream to the called end 200 by using the access network device 110. Specifically, the calling end 100 transmits the first audio stream to the media processing network element 220 (first media processing network element) by using the access network device 110, and the media processing network element 220 transmits the first audio stream to the called end 200 by using the access network device 210. In this way, the first audio stream is transmitted from the calling end 100 to the called end 200.

316: The called end 200 transmits a second audio stream to the calling end 100 by using the access network device 210.

The media processing network element 120 (second media processing network element) learns, in step 313 by using the second disable notification, that the call-to-message function is disabled in the downlink direction, and therefore may transmit call data from the called end 200 in a form of an audio stream. Specifically, the called end 200 transmits a second audio stream to the media processing network element 120 by using the access network device 210. Because the second audio stream is in a form of an audio stream, the media processing network element 120 does not need to perform other processing on the second audio stream, and the media processing network element 120 may transmit the second audio stream to the calling end 100 by using the access network device 110. In this way, the second audio stream is transmitted from the called end 200 to the calling end 100.

Step 313 is performed to disable call-to-message in the downlink direction, and step 316 represents transmitting call audio in the downlink direction by using an audio stream. Therefore, step 316 needs to be performed after step 313. Step 314 is performed to disable call-to-message in the uplink direction, and step 315 represents transmitting call audio in the uplink direction by using an audio stream. Therefore, step 315 needs to be performed after step 314. A time sequence between step 315 and step 316 is not limited. Step 316 may alternatively be performed before step 315 or simultaneously. This is not limited herein.

It needs to be noted that step 312 to step 316 are optional steps. Step 312 to step 316 are performed only when the signal at the calling end 100 recovers to normal (greater than the second threshold).

Similar to the first threshold, in this embodiment of this application, the second threshold may be determined based on a relationship between a signal strength and a packet loss rate, a relationship between a signal strength and a call definition, or the like. This is not limited herein. Optionally, the second threshold may depend on a setting of an operator. For example, the second threshold may be the same as the first threshold, or may have another value. This is not limited herein.

It needs to be noted that the calling end 100 is used as the first call end in FIG. 3 is merely an example, and FIG. 3 imposes no limitation on the first call end. The first call end may alternatively be the called end 200. If the first call end is the called end 200, the specific procedure in FIG. 3 is adaptively changed. Details are not described herein.

In addition to providing a channel resource for the first call end to implement the call between the first call end and the second call end, the access network device may provide a channel resource for another communications device. Therefore, the access network device may enable call-to-message in a timely manner based on a signal strength at the first call end and a channel resource allocation status. If a signal at the first call end is weak, and no more channel resources can be allocated to the first call end, it may be determined to enable call-to-message. If the signal strength at the first call end is weak, and more channel resources may be allocated to the first call end (for example, another terminal device connected to the access network device 110 is disconnected from the access network device 110, so that the access network device 110 may allocate a channel resource between the access network device 110 and the terminal device to another terminal device), the first call end may be allocated more channel resources, to ensure as far as possible that the first call end can implement the call in a form of an audio stream, and quality of audio data received by the second call end by using the audio stream is better. In this manner, coordination between proper channel resource allocation and a low delay and packet loss of the call is implemented.

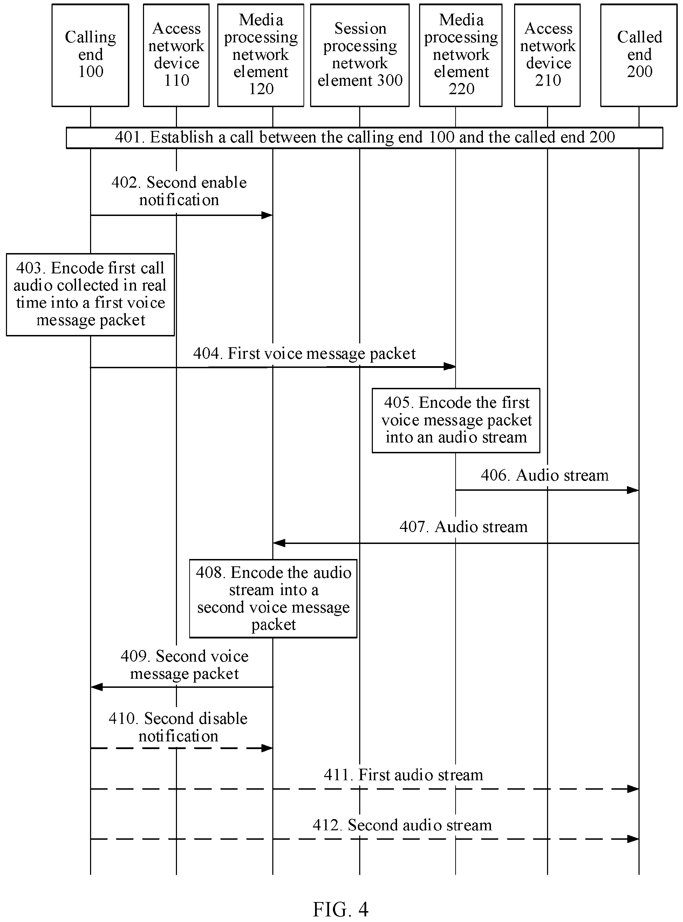

The embodiment in FIG. 3 describes a method in which the access network device determines to enable the call-to-message function. The following describes, with reference to FIG. 4, a method in which the first call end determines to enable the call-to-message function.

1.2. The first call end enables the call-to-message function.

In the embodiment shown in FIG. 4, actions performed by the first call end and another device are described by still using the example in which the calling end 100 is used as the first call end. Refer to FIG. 4. The method includes the following steps:
401: Establish a call between the calling end 100 and the called end 200.
   A process of establishing the call between the calling end 100 and the called end 200 is described in detail in the embodiment shown in FIG. 5, and is not described herein.
402: The calling end 100 transmits a second enable notification to the media processing network element 120 by using the access network device 110.

If the calling end 100 determines that the second signal strength of the access network device 110 at the calling end 100 is less than the first threshold, the calling end 110 may determine that a signal at the calling end 100 is poor, and therefore transmit a second enable notification to the media processing network element 120. The second enable notification indicates the media processing network element 120 to transmit call data in the downlink direction to the calling end 100 in a form of a voice message packet, to implement the call between the calling end 100 and the called end 200.

For a form and content included in the second enable notification, refer to step 303 in the embodiment shown in FIG. 3. Details are not described herein again.

403: The calling end 100 encodes first call audio collected in real time into a first voice message packet.

404: The calling end 100 transmits the first voice message packet to the media processing network element 220 by using the access network device 110.

405: The media processing network element 220 encodes the first voice message packet into an audio stream.

406: The media processing network element 220 transmits the audio stream to the called end 200 by using the access network device 210.

For steps 403 to 406, refer to steps 202 to 205 in the embodiment shown in FIG. 2. Details are not described herein again.

Optionally, in step 403, the calling end 100 may obtain the first voice message packet through encoding based on an encoding policy determined by the calling end 100.

Optionally, in step 404, the calling end 100 may transmit the first voice message packet to the access network device 110 based on a sending policy determined by the calling end 100, thereby reducing an amount of data transmitted between the calling end 100 and the access network device 110, and reducing a packet loss rate, a delay, and the like of uplink data transmission of the calling end 100.

407: The called end 200 transmits an audio stream to the media processing network element 120 by using the access network device 210.

408: The media processing network element 120 encodes the audio stream into a second voice message packet.

409: The media processing network element 120 transmits the second voice message packet to the calling end 100 by using the access network device 110.

For steps 407 to 409, refer to steps 309 to 311 in the embodiment shown in FIG. 3. Details are not described herein again.

Optionally, if an encoding policy is indicated in the second enable notification in step 402, in step 408, the second voice message packet may be obtained through encoding based on the encoding policy indicated in the second enable notification.

Optionally, if a sending policy is indicated in the second enable notification in step 402, in step 409, the second voice message packet may be transmitted to the calling end 100 based on the sending policy indicated in the second enable notification.

It needs to be noted that data transmission implemented in a form of a voice message packet in the uplink direction is described in steps 403 to 406, and data transmission implemented in a form of a voice message packet in the downlink direction is described in steps 407 to 409. Data can be transmitted in a form of a voice message packet in a corresponding direction only after the call-to-message function is enabled. Therefore, steps 403 to 406 (uplink transmission) may be performed before, simultaneously, or after step 402. A prerequisite for performing steps 403 to 406 before step 402 or simultaneously is that the calling end 100 has determined that the signal of the access network device 110 at the calling end 100 is poor. Steps 407 to 409 (downlink transmission) are performed after step 402 (downlink enabling). In this embodiment of this application, a time sequence relationship between uplink transmission and downlink transmission is not limited. Steps 403 to 406 may alternatively be performed after steps 407 to 409, or may be performed simultaneously with steps 407 to 409. In addition, a time sequence relationship between each of steps 403 to 406 and each of steps 407 to 409 is not limited.

Optionally, if the signal at the calling end 100 recovers to a normal level, the call-to-message function may be disabled, to implement the call between the calling end 100 and the called end 200 in a form of an audio stream. A process of disabling call-to-message is shown as follows:
410: The calling end 100 transmits a second disable notification to the media processing network element 120 by using the access network device 110.

If the calling end 100 determines that the second signal strength of the access network device 110 at the calling end 100 is greater than the second threshold, the calling end 100 may determine that the signal at the calling end 100 recovers to normal, and therefore transmit a second disable notification to the media processing network element 120. The second disable notification indicates the media processing network element 120 to transmit call data in the downlink direction to the calling end 100 in a form of an audio stream, to implement the call between the calling end 100 and the called end 200.

For a form and content included in the second disable notification, refer to step 313 in the embodiment shown in FIG. 3. Details are not described herein again.

411: The calling end 100 transmits a first audio stream to the called end 200 by using the access network device 110.

When determining that the signal strength of the access network device 110 at the calling end 100 is greater than the second threshold, the calling end 100 may determine that the signal strength at the calling end 100 recovers to a normal level, and may transmit call audio data to the called end 200 in a form of an audio stream.

Therefore, the calling end 100 may transmit a first audio stream to the called end 200 by using the access network device 110. For a specific process, refer to step 315 in the embodiment shown in FIG. 3. Details are not described herein again.

412: The called end 200 transmits a second audio stream to the calling end 100 by using the access network device 210.

The media processing network element 120 (second media processing network element) learns, in step 410 by using the second disable notification, that the call-to-message function is disabled in the downlink direction, and therefore may transmit call data from the called end 200 in a form of an audio stream. For a specific process, refer to step 315 in the embodiment shown in FIG. 3. Details are not described herein again.

Step 410 is performed to disable call-to-message in the downlink direction, and step 412 represents transmitting call audio in the downlink direction by using an audio stream. Therefore, step 412 needs to be performed after step 410. Step 411 represents transmitting call audio in the uplink direction by using an audio stream, and may be performed provided that the signal strength of the access network device 110 at the calling end 100 is greater than the second threshold. A time sequence between step 411 and step 412 is not limited. Step 412 may alternatively be performed before step 411 or simultaneously. This is not limited herein.

It needs to be noted that step 410 to step 412 are optional steps. Step 410 to step 412 are performed only when the signal at the calling end 100 recovers to normal (greater than the second threshold).

Similar to the first threshold, in this embodiment of this application, the second threshold may be determined based on a relationship between a signal strength and a packet loss rate, a relationship between a signal strength and a call definition, or the like. This is not limited herein. Optionally, the second threshold may depend on a setting of an operator. For example, the second threshold may be the same as the first threshold, or may have another value. This is not limited herein.

It needs to be noted that the calling end 100 is used as the first call end in FIG. 4 is merely an example, and FIG. 4 imposes no limitation on the first call end. The first call end may alternatively be the called end 200. If the first call end is the called end 200, the specific procedure in FIG. 4 is adaptively changed. Details are not described herein.

In this embodiment of this application, the access network device may notify, by using the second enable notification, the media processing network element to implement the call between the first call end and the second call end in a form of a voice message packet. The voice message packet is transmitted in the downlink direction from the media processing network element to the first call end, so that a data amount in the downlink direction is reduced. Compared with transmitting an audio stream in the downlink direction, a packet loss probability can be reduced, and a delay can be reduced, thereby ensuring quality and real-time performance of the call in the downlink direction on the side of the first call end.

The foregoing describes, by using the embodiments shown in FIG. 2 to FIG. 4, a method for implementing call-to-message when a signal at the first call end is poor during a call. For step 201 in FIG. 2, step 301 in FIG. 3, and step 401 in FIG. 4, establishment of the call between the calling end 100 and the called end 200 is described only in general, and a call establishment process is not described in detail. To implement the call-to-message function during a call, whether a terminal supports call-to-message needs to be determined in a call establishment process. The following describes, with reference to FIG. 5, a call establishment process provided in an embodiment of this application. The embodiment shown in FIG. 5 may be considered as an extension of steps 201, 301, and 401.

2. Call establishment method provided in an embodiment of this application.

Refer to FIG. 5. A call establishment method provided in an embodiment of this application includes the following steps:
501: The access network device 110 transmits a measurement control request to the calling end 100.
   After the calling end 100 accesses the IMS network by using the access network device 110, the access network device 110 may transmit a measurement control request to the calling end 100, to obtain a signal strength of the access network device 110 at the calling end 100.
502: The calling end 100 reports a measurement result to the access network device 110.
   After receiving the measurement control request, the calling end 100 may report a measurement result to the access network device 110. The measurement result indicates the signal strength of the access network device 110 at the calling end 100.
503: The calling end 100 transmits a session establishment request to the session processing network element 300 by using the access network device 110.

When the calling end 100 needs to initiate a call with the called end 200, the calling end 100 may transmit a session establishment request to the session processing network element 300 by using the access network device 110. The session establishment request may indicate that the calling end 100 supports call-to-message.

Optionally, the session establishment request may be an SDP request. In this embodiment of this application, an SDP packet is extended:

A field a=SupportofSpeechtoVoiceMessage is defined, and the field indicates that the calling end 100 supports call-to-message.

504: The session processing network element 300 transmits the session establishment request to the called end 200 by using the access network device 210.

After receiving the session establishment request from the calling end 100, the session processing network element 300 may transmit the session establishment request to the called end 200 by using the access network device 210, to establish a call between the calling end 100 and the called end 200.

505: The session processing network element 300 transmits a media control request to the media processing network element 120.

In step 503, the session establishment request received by the session processing network element 300 indicates that the calling end 100 supports the call-to-message function. Therefore, the session processing network element 300 may transmit a media control request to the media processing network element 120. The media control request indicates that the calling end 100 supports the call-to-message function.

506: The media processing network element 120 transmits the media control request to the access network device 110.

After receiving the media control request from the session processing network element 300, the media processing network element 120 may transmit the media control request to the access network device 110, to indicate that the calling end 100 supports the call-to-message function.

Optionally, if the call-to-message function is enabled and disabled by the calling end 100 (in the embodiment shown in FIG. 4), the access network device 110 does not need to learn that the calling end 100 supports call-to-message. In this case, step 506 may not be performed.

Optionally, the session establishment request in step 503 may indicate an encoding scheme supported by the calling end 100. The media control request in 505 and 506 (optional) may also indicate the encoding scheme supported by the calling end 100. After the call-to-message function is enabled on the side of the calling end, based on the encoding scheme, the media processing network element may encode, in the encoding scheme, an audio stream from the called end 200 or a voice message packet that cannot be decoded by the calling end 100, so that an obtained voice message packet can be decoded by the calling end 100.

507: The called end 200 transmits a session establishment response to the calling end by using the access network device 210.

If a communications environment of the called end 200 allows establishment of the call with the calling end 100, the called end 200 may transmit a session establishment response to the calling end by using the access network device 210.

Optionally, if the called end 200 also supports the call-to-message function, after receiving the session establishment request in step 504, the called end 200 may also notify the media processing network element 220 and/or the access network device 210 that the called end 200 supports the call-to-message function. That is, after step 504, corresponding to step 505 and step 506, on the side of the called end, a media control request may also be transmitted to the media processing network element 220 and/or the access network device 210 on the side of the called end, to indicate that the called end 200 supports the call-to-message function. Similar to the media control request on the side of the calling end, the media control request on the side of the called end may also indicate an encoding scheme supported by the called end 200. After the call-to-message function is enabled on the side of the called end, based on the encoding scheme, the media processing network element may encode, in the encoding scheme, an audio stream from the calling end 100 or a voice message packet that cannot be decoded by the called end 200, so that an obtained voice message packet can be decoded by the called end 200.

In this embodiment of this application, the side of the calling end includes the calling end 100, the access network device 110, and the media processing network element 120, and the side of the called end includes the called end 200, the access network device 210, and the media processing network element 220.

Optionally, if the media control request on the side of the calling end indicates the encoding scheme supported by the calling end 100, and the media control request on the side of the called end indicates the encoding scheme supported by the called end 200, when call-to-message is enabled on both the side of the calling end and the side of the called end, the calling end 100 encodes call audio data in the encoding scheme supported by the called end 200, and the called end 200 encodes call audio data in the encoding scheme supported by the calling end 100, so that in the IMS network, no media processing network element needs to encode a voice message packet in a transmission direction from the calling end 100 to the called end 200 or from the called end 200 to the calling end 100, and voice message packets received by both ends can be directly decoded. This reduces processing procedure of the media processing network elements, and reduces a data transmission delay.

For example, the encoding schemes of the calling end 100 and the called end 200 may be negotiated by using an SDP offer/answer message. An SDP offer message may carry a set of encoding schemes supported by the calling end 100. After receiving the SDP offer message from the calling end 100, the called end 200 may select, based on the set of encoding schemes supported by the calling end 100, an encoding scheme supported by the called end from the set, to determine a set of encoding schemes that can be supported by both ends. Then, an SDP answer message is transmitted to the calling end 100, and the SDP answer message carries the encoding scheme set that is finally determined by the calling and called ends.

Optionally, the SDP offer message may be the session establishment request message sent in steps 503 and 504, and the SDP answer message may be the session establishment response message transmitted in step 507.

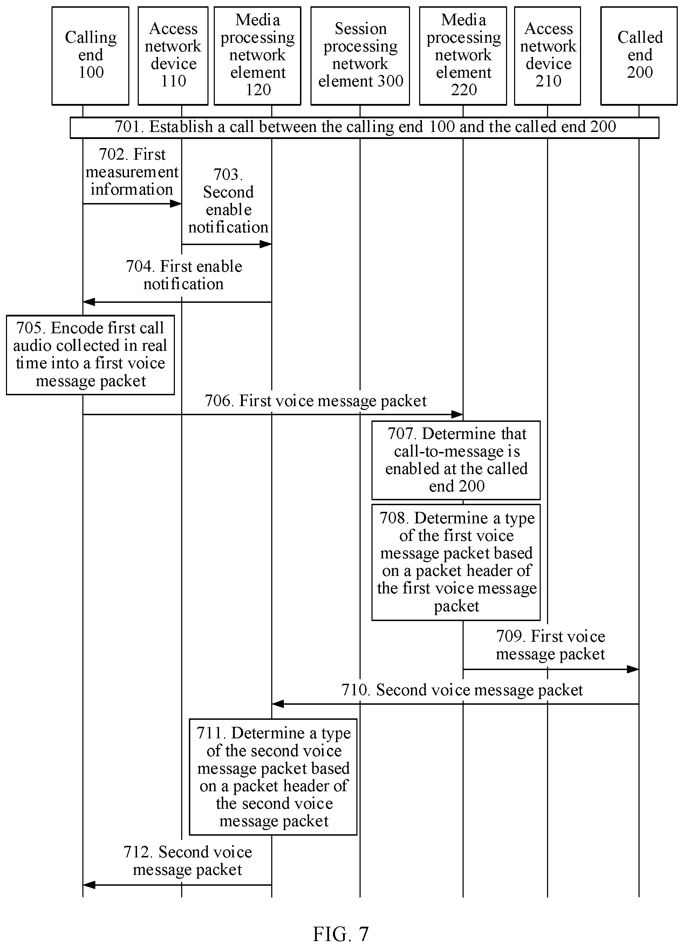

FIG. 3 and FIG. 4 describe a data transmission method when a signal at a first call end is poor. If signals of both a first call end and a second call end are poor, a call between the first call end and the second call end may be implemented by using a method shown in FIG. 7.

3. Data transmission method provided in an embodiment of this application when signals at both ends of a call are poor.

Refer to FIG. 7. Based on the embodiment (method in which the access network device determines to enable call-to-message) shown in FIG. 3, a data transmission method provided in an embodiment of this application when signals at both ends of a call are poor includes the following steps:
701: Establish a call between the calling end 100 and the called end 200.
   For step 701, refer to the embodiment shown in FIG. 5. Details are not described herein again.
702: The calling end 100 transmits first measurement information to the access network device 110.
703: The access network device 110 transmits a second enable notification to the media processing network element 120.
704: The media processing network element 120 transmits a first enable notification to the calling end 100 by using the access network device 110.
705: The calling end 100 encodes first call audio collected in real time into a first voice message packet.
706: The calling end 100 transmits the first voice message packet to the media processing network element 220 by using the access network device 110.
   For steps 702 to 706, refer to steps 302 to 306 in the embodiment shown in FIG. 3. Details are not described herein again.
707: The media processing network element 220 determines that call-to-message is enabled at the called end 200.

The media processing network element 220 is a media processing network element on the side of the called end, and is also referred to as a first media processing network element in this embodiment of this application. A process in which the media processing network element 120 (second media processing network element) on the side of the calling end determines, based on the second enable notification, that call-to-message is enabled at the calling end 100 is described in step 303 in the embodiment shown in FIG. 3 and step 402 in the embodiment shown in FIG. 4. Therefore, the media processing network element 220 may also determine, based on a similar enable notification, that call-to-message is enabled at the called end 200. For details, refer to step 303 or step 402. Details are not described herein again.

Optionally, a process in which the calling end 100 and the media processing network element 120 determine that call-to-message is enabled on the side of the calling end is described in step 702 to step 704, and in step 702 to step 704, the access network device determines to enable call-to-message. Step 702 to step 704 may be replaced with step 402 in the embodiment shown in FIG. 4. In a solution after the replacement, the calling end 100 determines to enable call-to-message on the side of the calling end.

That is, either the calling end 100 or the access network device 110 may determine to enable call-to-message on the side of the calling end. Similarly, the called end 200 or the access network device 210 may determine to enable call-to-message on the side of the called end. Four solutions may be obtained by combining those determining to enable call-to-message on the two sides. This is not limited herein.

Optionally, step 707 is not related to any one of step 702 to step 706 in time. Therefore, step 707 may be performed before any one of step 702 to step 706 or simultaneously, provided that step 707 is performed after step 701. This is not limited herein.

708: The media processing network element 220 determines a type of the first voice message packet based on a packet header of the first voice message packet.

If the media processing network element 220 determines in step 707 that call-to-message is enabled at the called end 200, it needs to be ensured that data to be transmitted to the called end 200 is in a form of a voice message packet.

Optionally, the packet header of the first voice message packet may indicate that the first voice message packet is a voice message packet. The media processing network element 220 may determine, based on the packet header, that the received first voice message packet is a voice message packet. In step 709, the first voice message packet may be transmitted to the called end 200 by using the access network device 210.

Optionally, if the packet header of the first voice message packet indicates that the first voice message packet is not a voice message packet (for example, an audio stream), it is a case in which call-to-message is enabled on a single side, and a non-voice message packet is received. For a processing procedure, refer to steps 310 and 311 in the embodiment shown in FIG. 3 or steps 408 and 409 in the embodiment shown in FIG. 4. Details are not described herein again.

Optionally, the packet header of the first voice message packet may further indicate an encoding scheme of the first voice message packet. For example, similar to step 306 in FIG. 3, the first voice message packet may be transmitted in a form of an RTP packet. In this embodiment of this application, a header PT (payload type) of an RPT packet header may be extended. The header PT field may indicate that the packet is a voice message packet and indicate an encoding scheme of the voice message packet.

If the packet header indicates the encoding scheme of the first voice message packet, and in step 701, the media processing network element 220 may learn an encoding scheme supported by the called end 200, the media processing network element 220 may determine whether the called end 200 supports decoding for the encoding scheme of the first voice message packet. If the decoding is supported, in step 709, the first voice message packet may be transmitted to the called end 200 by using the access network device 210. If the decoding is not supported, based on the encoding scheme supported by the called end 200, the first voice message packet is transcoded to a format that can be decoded by the called end 200, and in step 709, a transcoded first voice message packet is transmitted to the called end 200.

709: The media processing network element 220 transmits the first voice message packet to the called end 200 by using the access network device 210.

After obtaining the first voice message packet, the media processing network element 220 may transmit the first voice message packet to the called end 200 by using the access network device 210.

710: The called end 200 transmits a second voice message packet to the media processing network element 120 by using the access network device 210.

711: The media processing network element 120 determines a type of the second voice message packet based on a packet header of the second voice message packet.

712: The media processing network element 120 transmits the second voice message packet to the calling end 100 by using the access network device 110.

A process of transmitting call audio from the calling end 100 to the called end 200 is described in steps 706, 708, and 709. Steps 710 to 712 are a process of transmitting call audio from the called end 200 to the calling end 100, which is similar to the process of transmitting the call audio from the calling end 100 to the called end 200. Details are not described herein again.

A process in which call-to-message is enabled and the call between the calling end 100 and the called end 200 is implemented in a form of a voice message packet when signals at both the calling end 100 and the called end 200 are poor is described in steps 702 to 712. If the signal at the calling end 100 and/or the called end 200 recovers to a normal level, at a corresponding end, call-to-message may be disabled, and the call is implemented in a form of an audio stream. For a specific process, refer to steps 312 to 316 in the embodiment shown in FIG. 3 or steps 410 to 412 in the embodiment shown in FIG. 4. Details are not described herein again.

The foregoing describes the data transmission method provided in embodiments of this application. The following describes, with reference to accompanying drawings, a communications device and a communications system that are configured to implement the data transmission method provided in embodiments of this application.

III. Communications device and communications system that are provided in embodiments of this application.

Embodiments of this application provide structures of communications apparatuses such as an access network device and a first call end, and structures of a communications system, a related software product, and the like, which are separately described below.

### 1. Structure of the access network device.

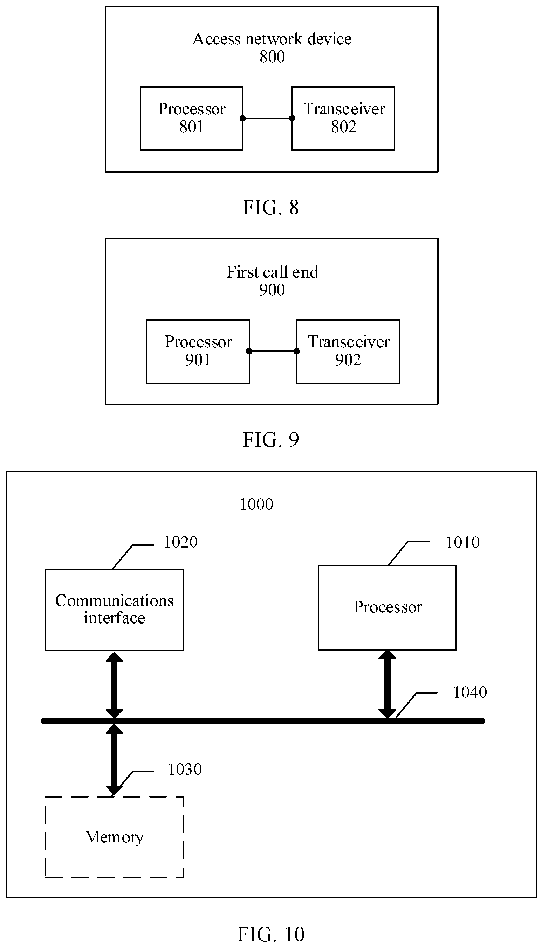

FIG. 8 is a schematic diagram of a structure of an access network device according to an embodiment of this application. The access network device 800 includes:
a processor 801 and a transceiver 802.

The processor 801 is configured to: perform processing to obtain data to be transmitted by the transceiver, and/or process data received by the transceiver.

The transceiver 802 is configured to: establish a call between a first call end and a second call end by using an IP multimedia subsystem IMS network; receive a first voice message packet from the first call end, where the first voice message packet is sent after the first call end determines that a first signal strength is less than a first threshold, and the first signal strength is a signal strength of the access network device at the first call end; and transmit the first voice message packet to a first media processing network element, to implement the call between the first call end and the second call end by using the first media processing network element.

The access network device 800 is configured to implement the data transmission method in the embodiments shown in FIG. 2 to FIG. 7.

### 2. Structure of the first call end.

FIG. 9 is a schematic diagram of a structure of a first call end according to an embodiment of this application. The first call end 900 includes:
a processor 901 and a transceiver 902.

The processor 901 is configured to: perform processing to obtain data to be transmitted by the transceiver, and/or process data received by the transceiver.

The transceiver 902 is configured to: establish a call with a second call end by using an IP multimedia subsystem IMS network; if determining that a first signal strength of an accessed access network device is less than a first threshold, encode first call audio collected in real time to obtain a first voice message packet; and transmit the first voice message packet to a first media processing network element by using the access network device, to implement the call between the first call end and the second call end by using the first media processing network element.

The first call end 900 is configured to implement the data transmission method in the embodiments shown in FIG. 2 to FIG. 7.

3. Another structure of the access network device and/or the first call end that is provided in an embodiment of this application.

Optionally, other than the foregoing structure, the communications apparatus in embodiments of this application may alternatively have a structure shown as follows:

Refer to FIG. 10. An embodiment of this application further provides a communications apparatus 1000, configured to implement a function of the access network device or the first call end in the foregoing method, that is, a function of the calling end 100, the called end 200, the access network device 110, or the access network device 210. The communications apparatus may be the access network device or the first call end, or may be an apparatus in the access network device or the first call end, or may be an apparatus that can be used in matching with the access network device or the first call end. The communications apparatus 1000 may be a chip system. In this embodiment of this application, the chip system may include a chip, or may include a chip and another discrete device. The communications apparatus 1000 includes at least one processor 1010, configured to implement a function of the access network device or the first call end in the method provided in embodiments of this application. The communications apparatus 1000 may further include a communications interface 1020. In this embodiment of this application, the communications interface 1020 may be a transceiver, a circuit, a bus, a module, or a communications interface of another type, and is configured to communicate with another device by using a transmission medium. For example, the communications interface 1020 is used by an apparatus in the communications apparatus 1000 to communicate with another device.

The processor 1010 may perform a function performed by the processor 801 in the access network device 800. The communications interface 1020 may be configured to perform a function performed by the transceiver 802 in the access network device 800.

When the communications apparatus 1000 is configured to perform an operation performed by the access network device 800, the processor 1010 is configured to: perform processing to obtain data to be transmitted by the communications interface 1020, and/or process data received by the communications interface 1020. The communications interface 1020 is configured to: establish a call between a first call end and a second call end by using an IP multimedia subsystem IMS network; receive a first voice message packet from the first call end, where the first voice message packet is sent after the first call end determines that a first signal strength is less than a first threshold, and the first signal strength is a signal strength of the access network device at the first call end; and transmit the first voice message packet to a first media processing network element, to implement the call between the first call end and the second call end by using the first media processing network element.

When the communications apparatus 1000 is configured to perform an operation performed by the first call end 900, the processor 1010 is configured to: perform processing to obtain data to be transmitted by the communications interface 1020, and/or process data received by the communications interface 1020. The communications interface 1020 is configured to: establish a call with a second call end by using an IP multimedia subsystem IMS network; if determining that a first signal strength of an accessed access network device is less than a first threshold, encode first call audio collected in real time to obtain a first voice message packet; and transmit the first voice message packet to a first media processing network element by using the access network device, to implement the call between the first call end and the second call end by using the first media processing network element.

The communications interface 1020 is further configured to perform another receiving or sending step or operation performed by the access network device or the first call end in the foregoing method embodiment. The processor 1010 may be further configured to perform other corresponding steps or operations performed by the access network device or the first call end in the foregoing method embodiment than sending and receiving, which are not described herein one by one.

The communications apparatus 1000 may further include at least one memory 1030, configured to store program instructions and/or data. The memory 1030 is coupled to the processor 1010. The coupling in this embodiment of this application is indirect coupling or a communications connection between apparatuses, units, or modules for information exchange between the apparatuses, the units, or the modules, and may be in electrical, mechanical, or other forms. The processor 1010 may cooperate with the memory 1030. The processor 1010 may execute the program instructions stored in the memory 1030. In a possible implementation, at least one memory may be integrated with the processor. In another possible implementation, the memory 1030 is located outside the communications apparatus 1000.

A specific connection medium between the communications interface 1020, the processor 1010, and the memory 1030 is not limited in this embodiment of this application. In this embodiment of this application, the memory 1030, the processor 1010, and the communications interface 1020 are connected by using a bus 1040 in FIG. 10. The bus is represented by using a bold line in FIG. 10. Such a manner of connection between components is merely an example for description, and imposes no limitation. The bus may be classified into an address bus, a data bus, a control bus, and the like. For ease of representation, only one bold line is used to represent the bus in FIG. 10, but this does not mean that there is only one bus or only one type of bus.

In this embodiment of this application, the processor 1010 may be one or more central processing units (Central Processing Units, CPUs). When the processor 1010 is one CPU, the CPU may be a single-core CPU, or may be a multi-core CPU. The processor 1010 may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams disclosed in embodiments of this application. The general-purpose processor may be a microprocessor or any conventional processor or the like. Steps of the method disclosed with reference to embodiments of this application may be directly performed by a hardware processor, or may be performed by using a combination of hardware in the processor and a software module.

In this embodiment of this application, the memory 1030 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory may be, but is not limited to, any other medium that can be used to carry or store expected program code in a form of instructions or a data structure and that can be accessed by a computer. Alternatively, the memory in this embodiment of this application may be a circuit or any other apparatus that can implement a storage function, to store program instructions and/or data.

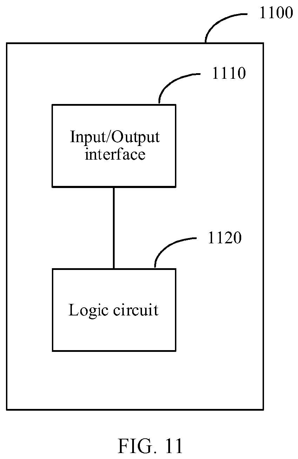

Optionally, other than the foregoing structure, the communications apparatus in embodiments of this application may alternatively have a structure shown as follows:
Refer to FIG. 11. An embodiment of this application further provides a communications apparatus 1100, which may be configured to implement a function of the access network device or the first call end in the foregoing method. The communications apparatus 1100 may be a chip in the access network device or the first call end. The communications apparatus includes:
at least one input/output interface 1110 and a logic circuit 1120. The input/output interface 1110 may be an input/output circuit, or may be referred to as a communications interface. The logic circuit 1120 may be a signal processor, a chip, or another integrated circuit that can implement the method in this application.

The at least one input/output interface 1110 is configured to input or output a signal or data. For example, when the apparatus is the access network device or is used by the access network device, the input/output interface 1110 is configured to communicate with the first call end. For example, when the apparatus is the first call end or is used by the first call end, the input/output interface 1110 is configured to communicate with the access network device.

The logic circuit 1120 is configured to perform some or all steps of any method provided in embodiments of this application. The logic circuit may implement a function implemented by the processor 801 in the access network device 800 or the processor 901 in the first call end 900. For example, when the apparatus is the access network device or is used by the access network device, the apparatus is configured to perform steps performed by the access network device in various possible implementations in the foregoing method embodiment. For example, the logic circuit 1120 is configured to enable a call-to-message function. When the apparatus is the first call end or is used by the first call end, the apparatus is configured to perform steps performed by the first call end (calling end/called end) in various possible implementations in the foregoing method embodiment. For example, the logic circuit 1120 is configured to implement a call with a peer end by using a voice message packet.

When the communications apparatus is a chip applied to the access network device, the access network device chip implements a function of the access network device in the foregoing method embodiment. The access network device chip receives information from another module (for example, a radio frequency module or an antenna) in the access network device, and the information is sent by the first call end or the media processing network element to the access network device. Alternatively, the access network device chip sends information to another module (such as a radio frequency module or an antenna) in the first call end or the media processing network element, and the information is sent by the access network device to the first call end or the media processing network element.

When the communications apparatus is a chip applied to the first call end, the first call end chip implements a function of the first call end in the foregoing method embodiment. The first call end chip receives information from another module (for example, a radio frequency module or an antenna) in the first call end, and the information is sent by the access network device or the media processing network element to the first call end. Alternatively, the first call end chip sends information to another module (for example, a radio frequency module or an antenna) in the first call end, and the information is sent by the first call end to the access network device or the media processing network element.

Based on a same concept as the foregoing method embodiment, an embodiment of this application further provides a computer-readable storage medium. The computer-readable storage medium stores a computer program, and the computer program is executed by hardware (for example, a processor), to implement some or all steps of any method performed by any apparatus in embodiments of this application.

Based on a same concept as the foregoing method embodiment, an embodiment of this application further provides a computer program product including program instructions. When the computer program product runs on a computer, the computer is enabled to perform some or all steps of any method in the foregoing aspects.

Based on a same concept as the foregoing method embodiment, this application further provides a chip or a chip system. The chip may include a processor. The chip may further include a memory (or storage module) and/or a transceiver (or communications module), or the chip is coupled to a memory (or storage module) and/or a transceiver (or communications module). The transceiver (or communications module) may be configured to support the chip in wired and/or wireless communication. The memory (or storage module) may be configured to store a program. The processor may invoke the program to implement an operation performed by the terminal or the network device in the foregoing method embodiment or any one of the possible implementations of the method embodiment. The chip system may include the foregoing chip, or may include the foregoing chip and another discrete component, such as a memory (or storage module) and/or a transceiver (or communications module).

4. Structure of a communications system provided in an embodiment of this application.

Based on a same concept as the foregoing method embodiment, this application further provides a communications system. The communications system may include at least one of the first call end and the access network device. The communications system may be configured to implement an operation performed by the terminal or the network device in the foregoing method embodiment or any one of the possible implementations of the method embodiment. For example, the communications system may have a structure shown in FIG. 1.

It may be clearly understood by a person skilled in the art that, for a purpose of convenient and brief description, for a detailed working process of the foregoing system, apparatus, and unit, refer to a corresponding process in the foregoing method embodiment. Details are not described herein again.

In the several embodiments provided in this application, it needs to be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software functional unit and sold or used as an independent product, the integrated unit may be stored in a computer-readable storage medium. Based on such an understanding, the technical solutions in this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

## Claims

1. A data transmission method applied to an access network device, and the method comprises:
establishing (201) a call between a first call end and a second call end by using an IP multimedia subsystem, IMS, network;
receiving (203) a first voice message packet from the first call end, wherein the first voice message packet is sent after the first call end determines that a first signal strength is less than a first threshold, and the first signal strength is a signal strength of the access network device at the first call end, and the first voice message packet comprises encoded first call audio collected in real time; and
transmitting (203) the first voice message packet to a first media processing network element, to implement the call between the first call end and the second call end by using the media processing network element, the first media processing network element being configured to encode the first voice message packet into an audio stream, and configured to transmit the audio stream to the second call end;
wherein before the receiving a first voice message packet from the first call end, the method further comprises:
receiving (302) first measurement information from the first call end, wherein the first measurement information indicates the first signal strength of the access network device at the first call end; and
transmitting (304) a first enable notification to the first call end based on that the first signal strength is less than the first threshold, wherein the first enable notification indicates the first call end to implement the call with the second call end in a form of a voice message packet.

2. The method according to claim 1, wherein the method further comprises:
receiving second measurement information from the first call end, wherein the second measurement information indicates a second signal strength of the access network device at the first call end;
transmitting a second enable notification to a second media processing network element based on that the second signal strength is less than the first threshold, wherein the second enable notification indicates the second media processing network element to implement the call between the first call end and the second call end in a form of a voice message packet;
receiving a second voice message packet from the second media processing network element; and
transmitting the second voice message packet to the first call end.

3. The method according to claim 1, wherein the method further comprises:
receiving a second enable notification from the first call end, wherein the second enable notification indicates a second media processing network element to implement the call between the first call end and the second call end in a form of a voice message packet;
transmitting the second enable notification to the second media processing network element;
receiving a second voice message packet from the second media processing network element; and
transmitting the second voice message packet to the first call end.

4. The method according to any one of claims 1 to 3, wherein after the receiving a first voice message packet from the first call end, the method further comprises:
receiving a first audio stream from the first call end, wherein the first audio stream is sent after the first call end determines that a third signal strength is greater than a second threshold, and the third signal strength is a signal strength of the access network device at the first call end; and
transmitting the first audio stream to the first media processing network element, to implement the call between the first call end and the second call end by using the first media processing network element.

5. The method according to any one of claims 1 to 4, wherein before the receiving a first voice message packet from the first call end, the method further comprises:
transmitting a first shift indication to the first call end, wherein the first shift indication indicates the first call end to change a sending policy at a first shift time, and transmit a voice message packet by using a first sending policy; and
the receiving a first voice message packet from the first call end comprises:
receiving the first voice message packet that is transmitted from the first call end by using the first sending policy; and
transmitting the first voice message packet to the first media processing network element by using the first sending policy.

6. A data transmission method applied to a first call end, and the method comprises:
establishing (201) a call with a second call end by using an IP multimedia subsystem, IMS, network;
if determining that a first signal strength of an accessed access network device is less than a first threshold, encoding (202) first call audio collected in real time to obtain a first voice message packet; and
transmitting (203) the first voice message packet to a first media processing network element by using the access network device, to implement the call between the first call end and the second call end by using the first media processing network element, the first media processing network element being configured to encode the first voice message packet into an audio stream, and configured to transmit the audio stream to the second call end;
wherein before the encoding first call audio collected in real time to obtain a first voice message packet, the method further comprises:
transmitting (302) first measurement information to the access network device, wherein the first measurement information indicates the first signal strength of the access network device at the first call end; and
receiving (304) a first enable notification from the access network device, wherein the first enable notification indicates the first call end to implement the call with the second call end in a form of a voice message packet.

7. The method according to claim 6, wherein the method further comprises:
transmitting second measurement information to the access network device, wherein the second measurement information indicates a second signal strength of the access network device at the first call end; and
receiving a second voice message packet from a second media processing network element by using the access network device.

8. The method according to claim 6, wherein the method further comprises:
transmitting a second enable notification to a second media processing network element by using the access network device, wherein the second enable notification indicates the second media processing network element to implement the call between the first call end and the second call end in a form of a voice message packet; and
receiving a second voice message packet from the second media processing network element by using the access network device.

9. The method according to any one of claims 6 to 8, wherein after the transmitting the first voice message packet to a first media processing network element by using the access network device, the method further comprises:
if determining that a third signal strength of the access network device is greater than a second threshold, transmitting a first audio stream to the first media processing network element by using the access network device, to implement the call between the first call end and the second call end by using the first media processing network element.

10. A communications apparatus, comprising: a processor and a communications interface, wherein the processor is configured to implement the method according to any one of claims 1 to 9.

11. A communications system, wherein the communications system comprises:
a first call end, and an access network device, wherein
the access network device is configured to implement the method according to any one of claims 1 to 5; and
the first call end is configured to implement the method according to any one of claims 6 to 9.

12. A computer-readable storage medium, wherein the computer-readable storage medium stores a program, and when a computer executes the program, the method according to any one of claims 1 to 9 is performed.

13. A computer program product, wherein when the computer program product is executed on a computer, the computer performs the method according to any one of claims 1 to 9.

## Patentansprüche

1. Datenübertragungsverfahren, das auf eine Zugriffsnetzvorrichtung angewandt wird, wobei das Verfahren Folgendes umfasst:
Einrichten (201) eines Anrufs zwischen einem ersten Anrufende und einem zweiten Anrufende unter Verwendung eines IP-Multimedia-Subsystem-Netzes, IMS-Netzes;
Empfangen (203) eines ersten Sprachnachrichtenpakets von dem ersten Anrufende, wobei das erste Sprachnachrichtenpaket gesendet wird, nachdem das erste Anrufende bestimmt, dass eine erste Signalstärke kleiner als ein erster Schwellenwert ist, und die erste Signalstärke eine Signalstärke der Zugriffsnetzvorrichtung an dem ersten Anrufende ist und das erste Sprachnachrichtenpaket ein codiertes erstes Anrufaudio umfasst, das in Echtzeit erfasst wird; und
Übertragen (203) des ersten Sprachnachrichtenpakets an ein erstes Medienverarbeitungsnetzelement, um den Anruf zwischen dem ersten Anrufende und dem zweiten Anrufende unter Verwendung des Medienverarbeitungsnetzelements umzusetzen,
wobei das erste Medienverarbeitungsnetzelement dazu konfiguriert ist, das erste Sprachnachrichtenpaket in einen Audiostrom zu codieren, und dazu konfiguriert ist, den Audiostrom an das zweite Anrufende zu übertragen;
wobei das Verfahren vor dem Empfangen eines ersten Sprachnachrichtenpakets von dem ersten Anrufende ferner Folgendes umfasst:
Empfangen (302) erster Messinformationen von dem ersten Anrufende, wobei die ersten Messinformationen die erste Signalstärke der Zugriffsnetzvorrichtung an dem ersten Anrufende angeben; und
Übertragen (304) einer ersten Aktivierungsbenachrichtigung an das erste Anrufende, darauf basierend, dass die erste Signalstärke kleiner als der erste Schwellenwert ist, wobei die erste Aktivierungsbenachrichtigung dem ersten Anrufende angibt, den Anruf mit dem zweiten Anrufende in einer Form eines Sprachnachrichtenpakets umzusetzen.

2. Verfahren nach Anspruch 1, wobei das Verfahren ferner Folgendes umfasst:
Empfangen zweiter Messinformationen von dem ersten Anrufende, wobei die zweiten Messinformationen eine zweite Signalstärke der Zugriffsnetzvorrichtung an dem ersten Anrufende angeben;
Übertragen einer zweiten Aktivierungsbenachrichtigung an ein zweites Medienverarbeitungsnetzelement, darauf basierend, dass die zweite Signalstärke kleiner als der erste Schwellenwert ist, wobei die zweite Aktivierungsbenachrichtigung dem zweiten Medienverarbeitungsnetzelement angibt, den Anruf zwischen dem ersten Anrufende und dem zweiten Anrufende in einer Form eines Sprachnachrichtenpakets umzusetzen;
Empfangen eines zweiten Sprachnachrichtenpakets von dem zweiten Medienverarbeitungsnetzelement; und
Übertragen des zweiten Sprachnachrichtenpakets an das erste Anrufende.

3. Verfahren nach Anspruch 1, wobei das Verfahren ferner Folgendes umfasst:
Empfangen einer zweiten Aktivierungsbenachrichtigung von dem ersten Anrufende, wobei die zweite Aktivierungsbenachrichtigung einem zweiten Medienverarbeitungsnetzelement angibt, den Anruf zwischen dem ersten Anrufende und dem zweiten Anrufende in einer Form eines Sprachnachrichtenpakets umzusetzen;
Übertragen der zweiten Aktivierungsbenachrichtigung an das zweite Medienverarbeitungsnetzelement;
Empfangen eines zweiten Sprachnachrichtenpakets von dem zweiten Medienverarbeitungsnetzelement; und
Übertragen des zweiten Sprachnachrichtenpakets an das erste Anrufende.

4. Verfahren nach einem der Ansprüche 1 bis 3, wobei das Verfahren nach dem Empfangen eines ersten Sprachnachrichtenpakets von dem ersten Anrufende ferner Folgendes umfasst:
Empfangen eines ersten Audiostroms von dem ersten Anrufende, wobei der erste Audiostrom gesendet wird, nachdem das erste Anrufende bestimmt, dass eine dritte Signalstärke größer als ein zweiter Schwellenwert ist und die dritte Signalstärke eine Signalstärke der Zugriffsnetzvorrichtung an dem ersten Anrufende ist; und
Übertragen des ersten Audiostroms an das erste Medienverarbeitungsnetzelement, um den Anruf zwischen dem ersten Anrufende und dem zweiten Anrufende unter Verwendung des ersten Medienverarbeitungsnetzelements umzusetzen.

5. Verfahren nach einem der Ansprüche 1 bis 4, wobei das Verfahren vor dem Empfangen eines ersten Sprachnachrichtenpakets von dem ersten Anrufende ferner Folgendes umfasst:
Übertragen einer ersten Umschaltangabe an das erste Anrufende, wobei die erste Umschaltangabe dem ersten Anrufende angibt, eine Senderichtlinie zu einem ersten Umschaltzeitpunkt zu ändern und ein Sprachnachrichtenpaket unter Verwendung einer ersten Senderichtlinie zu übertragen; und
das Empfangen eines ersten Sprachnachrichtenpakets von dem ersten Anrufende Folgendes umfasst:
Empfangen des ersten Sprachnachrichtenpakets, das von dem ersten Anrufende unter Verwendung der ersten Senderichtlinie übertragen wird; und
Übertragen des ersten Sprachnachrichtenpakets an das erste Medienverarbeitungsnetzelement unter Verwendung der ersten Senderichtlinie.

6. Datenübertragungsverfahren, das auf ein erstes Anrufende angewandt wird, wobei das Verfahren Folgendes umfasst:
Einrichten (201) eines Anrufs mit einem zweiten Anrufende unter Verwendung eines IP-Multimedia-Subsystem-Netzes, IMS-Netzes;
bei Bestimmen, dass eine erste Signalstärke einer Zugriffsnetzvorrichtung, auf die zugegriffen wird, kleiner als ein erster Schwellenwert ist, Codieren (202) eines ersten Anrufaudios, das in Echtzeit erfasst wird, um ein erstes Sprachnachrichtenpaket zu erlangen; und
Übertragen (203) des ersten Sprachnachrichtenpakets an ein erstes Medienverarbeitungsnetzelement unter Verwendung der Zugriffsnetzvorrichtung, um den Anruf zwischen dem ersten Anrufende und dem zweiten Anrufende unter Verwendung des ersten Medienverarbeitungsnetzelements umzusetzen, wobei das erste Medienverarbeitungsnetzelement dazu konfiguriert ist, das erste Sprachnachrichtenpaket in einen Audiostrom zu codieren, und dazu konfiguriert ist, den Audiostrom an das zweite Anrufende zu übertragen;
wobei das Verfahren vor dem Codieren des ersten Anrufaudios, das in Echtzeit erfasst wird, um ein erstes Sprachnachrichtenpaket zu erlangen, ferner Folgendes umfasst:
Übertragen (302) erster Messinformationen an die Zugriffsnetzvorrichtung, wobei die ersten Messinformationen die erste Signalstärke der Zugriffsnetzvorrichtung an dem ersten Anrufende angeben; und
Empfangen (304) einer ersten Aktivierungsbenachrichtigung von der Zugriffsnetzvorrichtung, wobei die erste Aktivierungsbenachrichtigung dem ersten Anrufende angibt, den Anruf mit dem zweiten Anrufende in einer Form eines Sprachnachrichtenpakets umzusetzen.

7. Verfahren nach Anspruch 6, wobei das Verfahren ferner Folgendes umfasst:
Übertragen zweiter Messinformationen an die Zugriffsnetzvorrichtung, wobei die zweiten Messinformationen eine zweite Signalstärke der Zugriffsnetzvorrichtung an dem ersten Anrufende angeben; und
Empfangen eines zweiten Sprachnachrichtenpakets von einem zweiten Medienverarbeitungsnetzelement unter Verwendung der Zugriffsnetzvorrichtung.

8. Verfahren nach Anspruch 6, wobei das Verfahren ferner Folgendes umfasst:
Übertragen einer zweiten Aktivierungsbenachrichtigung an ein zweites Medienverarbeitungsnetzelement unter Verwendung der Zugriffsnetzvorrichtung, wobei die zweite Aktivierungsbenachrichtigung dem zweiten Medienverarbeitungsnetzelement angibt, den Anruf zwischen dem ersten Anrufende und dem zweiten Anrufende in einer Form eines Sprachnachrichtenpakets umzusetzen; und
Empfangen eines zweiten Sprachnachrichtenpakets von dem zweiten Medienverarbeitungsnetzelement unter Verwendung der Zugriffsnetzvorrichtung.

9. Verfahren nach einem der Ansprüche 6 bis 8, wobei das Verfahren nach dem Übertragen des ersten Sprachnachrichtenpakets an ein erstes Medienverarbeitungsnetzelement unter Verwendung der Zugriffsnetzvorrichtung ferner Folgendes umfasst:
bei Bestimmen, dass eine dritte Signalstärke der Zugriffsnetzvorrichtung größer als ein zweiter Schwellenwert ist, Übertragen eines ersten Audiostroms an das erste Medienverarbeitungsnetzelement unter Verwendung der Zugriffsnetzvorrichtung, um den Anruf zwischen dem ersten Anrufende und dem zweiten Anrufende unter Verwendung des ersten Medienverarbeitungsnetzelements umzusetzen.

10. Kommunikationsgerät, umfassend: einen Prozessor und eine Kommunikationsschnittstelle, wobei der Prozessor dazu konfiguriert ist, das Verfahren nach einem der Ansprüche 1 bis 9 umzusetzen.

11. Kommunikationssystem, wobei das Kommunikationssystem Folgendes umfasst:
ein erstes Anrufende und eine Zugriffsnetzvorrichtung, wobei
die Zugriffsnetzvorrichtung dazu konfiguriert ist, das Verfahren nach einem der Ansprüche 1 bis 5 umzusetzen; und
das erste Anrufende dazu konfiguriert ist, das Verfahren nach einem der Ansprüche 6 bis 9 umzusetzen.

12. Computerlesbares Speichermedium, wobei das computerlesbare Speichermedium ein Programm speichert und, wenn ein Computer das Programm ausführt, das Verfahren nach einem der Ansprüche 1 bis 9 durchgeführt wird.

13. Computerprogrammprodukt, wobei, wenn das Computerprogrammprodukt auf einem Computer ausgeführt wird, der Computer das Verfahren nach einem der Ansprüche 1 bis 9 durchführt.

## Revendications

1. Procédé de transmission de données appliqué à un dispositif de réseau d'accès, et le procédé comprend :
l'établissement (201) d'un appel entre une première extrémité d'appel et une seconde extrémité d'appel à l'aide d'un réseau de sous-système multimédia IP, IMS ;
la réception (203) d'un premier paquet de message vocal provenant de la première extrémité d'appel, dans lequel le premier paquet de message vocal est envoyé après que la première extrémité d'appel a déterminé qu'une première intensité de signal est inférieure à un premier seuil, et la première intensité de signal est une intensité de signal du dispositif de réseau d'accès à la première extrémité d'appel, et le premier paquet de message vocal comprend le premier audio d'appel codé collecté en temps réel ; et
la transmission (203) du premier paquet de message vocal à un premier élément de réseau de traitement multimédia, pour mettre en œuvre l'appel entre la première extrémité d'appel et la seconde extrémité d'appel à l'aide de l'élément de réseau de traitement multimédia, le premier élément de réseau de traitement multimédia étant configuré pour coder le premier paquet de message vocal dans un flux audio, et configuré pour transmettre le flux audio à la seconde extrémité d'appel ;
dans lequel, avant la réception d'un premier paquet de message vocal provenant de la première extrémité d'appel, le procédé comprend également :
la réception (302) de premières informations de mesure provenant de la première extrémité d'appel, dans lequel les premières informations de mesure indiquent la première intensité de signal du dispositif de réseau d'accès à la première extrémité d'appel ; et
la transmission (304) d'une première notification d'activation à la première extrémité d'appel sur la base du fait que la première intensité de signal est inférieure au premier seuil, dans lequel la première notification d'activation indique à la première extrémité d'appel de mettre en œuvre l'appel avec la seconde extrémité d'appel sous la forme d'un paquet de message vocal.

2. Procédé selon la revendication 1, dans lequel le procédé comprend également :
la réception de secondes informations de mesure provenant de la première extrémité d'appel, dans lequel les secondes informations de mesure indiquent une deuxième intensité de signal du dispositif de réseau d'accès à la première extrémité d'appel ;
la transmission d'une seconde notification d'activation à un second élément de réseau de traitement multimédia sur la base du fait que la deuxième intensité de signal est inférieure au premier seuil, dans lequel la seconde notification d'activation indique au second élément de réseau de traitement multimédia de mettre en œuvre l'appel entre la première extrémité d'appel et la seconde extrémité d'appel sous la forme d'un paquet de message vocal ;
la réception d'un second paquet de message vocal provenant du second élément de réseau de traitement multimédia ; et
la transmission du second paquet de message vocal à la première extrémité d'appel.

3. Procédé selon la revendication 1, dans lequel le procédé comprend également :
la réception d'une seconde notification d'activation provenant de la première extrémité d'appel, dans lequel la seconde notification d'activation indique à un second élément de réseau de traitement multimédia de mettre en œuvre l'appel entre la première extrémité d'appel et la seconde extrémité d'appel sous la forme d'un paquet de message vocal ;
la transmission de la seconde notification d'activation au second élément de réseau de traitement multimédia ;
la réception d'un second paquet de message vocal provenant du second élément de réseau de traitement multimédia ; et
la transmission du second paquet de message vocal à la première extrémité d'appel.

4. Procédé selon l'une quelconque des revendications 1 à 3, dans lequel, après la réception d'un premier paquet de message vocal provenant de la première extrémité d'appel, le procédé comprend également :
la réception d'un premier flux audio provenant de la première extrémité d'appel, dans lequel le premier flux audio est envoyé après que la première extrémité d'appel a déterminé qu'une troisième intensité de signal est supérieure à un second seuil, et la troisième intensité de signal est une intensité de signal du dispositif de réseau d'accès à la première extrémité d'appel ; et
la transmission du premier flux audio au premier élément de réseau de traitement multimédia, pour mettre en œuvre l'appel entre la première extrémité d'appel et la seconde extrémité d'appel à l'aide du premier élément de réseau de traitement multimédia.

5. Procédé selon l'une quelconque des revendications 1 à 4, dans lequel, avant la réception d'un premier paquet de message vocal provenant de la première extrémité d'appel, le procédé comprend également :
la transmission d'une première indication de décalage à la première extrémité d'appel, dans lequel la première indication de décalage indique à la première extrémité d'appel de modifier une politique d'envoi à un premier moment de décalage, et de transmettre un paquet de message vocal à l'aide d'une première politique d'envoi ; et
la réception d'un premier paquet de message vocal provenant de la première extrémité d'appel comprend :
la réception du premier paquet de message vocal transmis depuis la première extrémité d'appel à l'aide de la première politique d'envoi ; et
la transmission du premier paquet de message vocal au premier élément de réseau de traitement multimédia à l'aide de la première politique d'envoi.

6. Procédé de transmission de données appliqué à une première extrémité d'appel, et le procédé comprend :
l'établissement (201) d'un appel avec une seconde extrémité d'appel à l'aide d'un réseau de sous-système multimédia IP, IMS ;
s'il est déterminé qu'une première intensité de signal d'un dispositif de réseau d'accès accédé est inférieure à un premier seuil, le codage (202) d'un premier appel audio collecté en temps réel pour obtenir un premier paquet de message vocal ; et
la transmission (203) du premier paquet de message vocal à un premier élément de réseau de traitement multimédia à l'aide du dispositif de réseau d'accès, pour mettre en œuvre l'appel entre la première extrémité d'appel et la seconde extrémité d'appel à l'aide du premier élément de réseau de traitement multimédia, le premier élément de réseau de traitement multimédia étant configuré pour coder le premier paquet de message vocal dans un flux audio, et configuré pour transmettre le flux audio à la seconde extrémité d'appel ;
dans lequel avant le codage du premier appel audio collecté en temps réel pour obtenir un premier paquet de message vocal, le procédé comprend également :
la transmission (302) de premières informations de mesure au dispositif de réseau d'accès, dans lequel les premières informations de mesure indiquent la première intensité de signal du dispositif de réseau d'accès à la première extrémité d'appel ; et
la réception (304) d'une première notification d'activation provenant du dispositif de réseau d'accès, dans lequel la première notification d'activation indique à la première extrémité d'appel de mettre en œuvre l'appel avec la seconde extrémité d'appel sous la forme d'un paquet de message vocal.

7. Procédé selon la revendication 6, dans lequel le procédé comprend également :
la transmission de secondes informations de mesure au dispositif de réseau d'accès, dans lequel les secondes informations de mesure indiquent une deuxième intensité de signal du dispositif de réseau d'accès à la première extrémité d'appel ; et
la réception d'un second paquet de message vocal provenant d'un second élément de réseau de traitement multimédia à l'aide du dispositif de réseau d'accès.

8. Procédé selon la revendication 6, dans lequel le procédé comprend également :
la transmission d'une seconde notification d'activation à un second élément de réseau de traitement multimédia à l'aide du dispositif de réseau d'accès, dans lequel la seconde notification d'activation indique au second élément de réseau de traitement multimédia de mettre en œuvre l'appel entre la première extrémité d'appel et la seconde extrémité d'appel sous la forme d'un paquet de message vocal ; et
la réception d'un second paquet de message vocal provenant du second élément de réseau de traitement multimédia à l'aide du dispositif de réseau d'accès.

9. Procédé selon l'une quelconque des revendications 6 à 8, dans lequel, après la transmission du premier paquet de message vocal à un premier élément de réseau de traitement multimédia à l'aide du dispositif de réseau d'accès, le procédé comprend également :
s'il est déterminé qu'une troisième intensité de signal du dispositif de réseau d'accès est supérieure à un second seuil, la transmission d'un premier flux audio au premier élément de réseau de traitement multimédia à l'aide du dispositif de réseau d'accès, pour mettre en œuvre l'appel entre la première extrémité d'appel et la seconde extrémité d'appel à l'aide du premier élément de réseau de traitement multimédia.

10. Appareil de communications, comprenant : un processeur et une interface de communications, dans lequel le processeur est configuré pour mettre en œuvre le procédé selon l'une quelconque des revendications 1 à 9.

11. Système de communications, dans lequel le système de communications comprend :
une première extrémité d'appel, et un dispositif de réseau d'accès, dans lequel
le dispositif de réseau d'accès est configuré pour mettre en œuvre le procédé selon l'une quelconque des revendications 1 à 5 ; et
la première extrémité d'appel est configurée pour mettre en œuvre le procédé selon l'une quelconque des revendications 6 à 9.

12. Support de stockage lisible par ordinateur, dans lequel le support de stockage lisible par ordinateur stocke un programme, et lorsqu'un ordinateur exécute le programme, le procédé selon l'une quelconque des revendications 1 à 9 est réalisé.

13. Produit de programme informatique, dans lequel lorsque le produit de programme informatique est exécuté sur un ordinateur, l'ordinateur réalise le procédé selon l'une quelconque des revendications 1 à 9.
